# EUROPEAN PATENT APPLICATION

(11) **EP 3 892 107 A1**
(43) Date of publication of application: **13.10.2021**
(21) Application number: 19893406.9
(22) Date of filing: 06.12.2019
(51) Int. Cl.: A23F 5/24, A23F 5/28

(54) **COFFEE BEVERAGE HAVING IMPROVED QUALITY OF TASTE EXHIBITED BY SUGAR AND SWEETENER**

(30) Priority: 07.12.2018 JP 2018230400
(71) Applicant: Suntory Holdings Limited, Osaka 530-8203 (JP)
(72) Inventor: ASAMI, Yoji, Kawasaki-shi, Kanagawa 211-0067 (JP); OHKURI, Tadahiro, Kawasaki-shi, Kanagawa 211-0067 (JP); FUJIE, Akiko, Kawasaki-shi, Kanagawa 211-0067 (JP); NAGAO, Koji, Kawasaki-shi, Kanagawa 211-0067 (JP); YOKOO, Yoshiaki, Kawasaki-shi, Kanagawa 211-0067 (JP)
(74) Representative: Mewburn Ellis LLP
(86) International application number: PCT/JP2019/047915
(87) International publication number: WO 2020/116638

(57) **Abstract**

The present invention pertains to a coffee beverage having improved quality of taste exhibited by a sugar and a sweetener and a method for producing the coffee beverage.

## Description

### TECHNICAL FIELD

The present invention relates to coffee beverages having improved quality of taste exhibited by a sugar and sweetener, and to methods for producing the coffee beverages.

### BACKGROUND ART

Humans have five sensory systems, and the sense of taste is one of the sensory systems of humans. The taste receptor organ to receive tastes is called taste buds, which exist on the fungiform papillae existing over a wide area, mainly on the tip of the tongue, on the vallate papillae existing on a limited area of the back of the tongue, and on the foliate papillae. The taste buds are a cell assembly composed of elongate cells, called taste cells, and basal cells. The taste cells protrude microvilli toward the tongue surface, and form synapses at bottom of the cells with taste nerve fibers entering the taste buds. Tastes we usually sense are transmitted as taste information via the taste nerves to the brain, where the tastes are perceived. Known taste receptors of sweetness include T1R2 and T1R3. T1R2 and T1R3 are reported to form hetero-dimers (Non-patent Literatures 1 to 3).

Although various studies have been made on the sense of taste, little has been revealed yet in this field. We usually experience various tastes of foods. Foods that seem to be tasty have appropriately mixed and well-harmonized tastes. The taste of foods may be tasted as a single taste in some cases, but often is tasted as a mixed taste of various tastes, which are associated with one another.

Meanwhile, foods have been required to have lower calories in addition to a good taste in recent years. This relates to a fact that lifestyle-related diseases such as obesity and diabetes are regarded as a problem.

However, to produce lower-calorie foods, their natural sugar concentration has to be maintained low. This is an obstruction in the case of providing foods that exhibit low calories and a good taste.

As an example of a contrast effect, which is an interaction of tastes, there has been long known a phenomenon in which addition of salt to sweet red-bean soup enhances sweetness. There is an example that reports the interaction between saltiness and sweetness by focusing on this phenomenon, and it is concluded that the interaction between sweetness and saltiness requires sweetness that is strong to a certain degree (a 15% solution) and a salt concentration that is high to a certain degree (0.1 to 0.2%) (Non-Patent Literature 4).

In addition, foods and drinks that exhibit sweetness by using a high-intensity sweetener of low calorie, such as Rebaudioside A, as a substitute for natural sugar have also been developed, but the sweetness exhibited by high-intensity sweeteners has distinctive aftertaste, which hinders the provision of good taste.

### CITATION LIST

### Non-Patent Literature

[Non-Patent Literature 1] Zhao G. Q., Zhang Y., Hoon M. A., Chandrashekar J., Erlenbach I., Ryba N. J. P., and Zuker1 C. S., Cell, 2003, Vol. 115, 255-266
[Non-Patent Literature 2] Li X, Staszewski L, Xu H, Durick K, Zoller M, Adler E., Proc Natl Acad Sci USA. 2002,99(7), 4692-4696.
[Non-Patent Literature 3] Fernstrom J. D., Munger S. D., Sclafani A., de Araujo I. E., Roberts A., and Molinary S., J. Nutr. 2012. Vol. 142: 1134S-1141S
[Non-Patent Literature 4] Ayumi Uchida, Nao Takagi, Rieko Horikiri, Miho Matsue, Yumiko Uchiyama and Masashi Omori, Research Bulletin of Otsuma Women's University for Home Economics -No.49 (2013. 3)

### SUMMARY OF THE INVENTION

### Problem to be Solved by the Invention

The development of a method for effectively improving the taste quality exhibited by a sugar and a sweetener while having an adequate sweetness intensity and maintaining a low amount of the natural sugar used in a coffee beverage has been much awaited.

### Means for Solving the Problems

The present inventors succeeded for the first time in increasing the sweetness based on the use of natural sugar and a specific high-intensity sweetener in combination and improving the taste quality by containing not only the natural sugar but also the specific high-intensity sweetener and adding sodium in a low concentration and potassium and/or calcium in a low concentration. It was unexpected that the effect of improving taste quality would be synergistically raised by adding a specific amount of potassium and/or calcium in addition to a specific amount of sodium.

That is, the present invention is as follows.
[1] A coffee beverage comprising:
   (a) natural sugar in an amount corresponding to a sweetness intensity X1;
   (b) high-intensity sweetener in an amount corresponding to a sweetness intensity X2;
   (c) 5 mg/100 ml to 90 mg/100 ml of sodium; and
   (d) 15 mg/100 ml to 100 mg/100 ml of potassium and/or 0.5 mg/100 ml to 50 mg/100 ml of calcium,
      wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
      0.1 < (X1 + X2) ≤ 20 is satisfied.
[2] Coffee beverage according to [1], wherein a sodium content is 25 to 60 mg/100 ml.
[3] Coffee beverage according to [1] or [2], comprising 25 to 70 mg/100 ml of potassium and/or 2 mg/100 ml to 25 mg/100 ml of calcium.
[4] Coffee beverage according to any of [1] to [3], wherein energy is 50 Kcal/100 ml or less.
[5] Coffee beverage according to any of [1] to [4], wherein X1 is 0.1 to 5.9.
[6] Coffee beverage according to any of [1] to [5], which comprises 40 mg/100 ml to 100 mg/100 ml of caffeine.
[7] Coffee beverage according to any of [1] to [6], wherein the natural sugar is at least one selected from the group consisting of glucose, sucrose, fructose, maltose, oligosaccharide, high-fructose corn syrup, lactose, psicose, allose, tagatose, and combinations thereof.
[8] Coffee beverage according to any of [1] to [7], wherein the high-intensity sweetener b1 is at least one selected from the group consisting of rebaudioside M, rebaudioside D, Luo han guo extract, mogroside V, and combinations thereof.
[9] Coffee beverage according to any of [1] to [8], wherein the sodium is at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptanoate, sodium gluconate, sodium glutamate, sodium tartrate, sodium aspartate, sodium lactate, sodium caseinate, sodium ascorbate, and mixtures thereof.
[10] Coffee beverage according to any of [1] to [9], wherein the potassium is at least one selected from the group consisting of potassium alginate, potassium chloride, potassium citrate, potassium gluconate, L-potassium glutamate, potassium bromate, DL-potassium hydrogen tartrate, L-potassium hydrogen tartrate, potassium nitrate, potassium hydroxide, potassium sorbate, potassium carbonate, potassium lactate, potassium norbixin, potassium pyrosulfate, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.
[11] Coffee beverage according to any of [1] to [10], wherein the calcium is at least one selected from the group consisting of L-calcium ascorbate, calcium alginate, calcium disodium ethylenediaminetetraacetate, calcium chloride, calcium carboxymethyl cellulose, calcium citrate, calcium glycerophosphate, calcium gluconate, L-calcium glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.
[12] Coffee beverage according to any of [1] to [11], wherein the coffee beverage comprises 25 to 40 mg/100 ml of sodium, comprises 25 to 70 mg/100 ml of potassium and/or 2 mg/100 ml to 25 mg/100 ml of calcium, and energy is 50 Kcal/100 ml or less, and X1 + X2 is 6 or more.
[13] Coffee beverage according to any of [1] to [12], which is packed in a container.
[14] A method for producing a coffee beverage, comprising to a raw material:
   (i) adding (a) natural sugar in an amount of a sweetness intensity X1 and (b) high-intensity sweetener in an amount of a sweetness intensity X2;
   (ii) adding (c) sodium such that a sodium content in the beverage is 5 mg/100 ml to 90 mg/100 ml; and
   (iii) adding (d) potassium such that a potassium content in the beverage is 15 mg/100 ml to 100 mg/100 ml and/or calcium such that a calcium content in the beverage is 0.5 mg/100 ml to 50 mg/100 ml,
      wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
      0.1 < (X1 + X2) ≤ 20 is satisfied.
[15] Method according to [14], wherein in the coffee beverage, the sodium content is 25 to 60 mg/100 ml.
[16] Method according to [14] or [15], wherein the coffee beverage comprises 25 to 70 mg/100 ml of potassium and/or 2 to 25 mg/100 ml of calcium.
[17] Method according to any of [14] to [16], wherein energy of the coffee beverage is 50 Kcal/100 ml or less.
[18] Method according to any of [14] to [17], wherein X1 is 0.1 to 5.9.
[19] Method according to any of [14] to [18], wherein the coffee beverage comprises 40 mg/100 ml to 100 mg/100 ml of caffeine.
[20] Method according to any of [14] to [19], wherein the natural sugar is at least one selected from the group consisting of glucose, sucrose, fructose, maltose, oligosaccharide, high-fructose corn syrup, lactose, psicose, allose, tagatose, and combinations thereof.
[21] Method according to any of [14] to [20], wherein the high-intensity sweetener is at least one selected from the group consisting of rebaudioside M, rebaudioside D, Luo han guo extract, mogroside V, and combinations thereof.
[22] Method according to any of [14] to [21], wherein the sodium is at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptanoate, sodium gluconate, sodium glutamate, sodium tartrate, sodium aspartate, sodium lactate, sodium caseinate, sodium ascorbate, and mixtures thereof.
[23] Method according to any of [14] to [22], wherein the potassium is at least one selected from the group consisting of potassium alginate, potassium chloride, potassium citrate, potassium gluconate, L-potassium glutamate, potassium bromate, DL-potassium hydrogen tartrate, L-potassium hydrogen tartrate, potassium nitrate, potassium hydroxide, potassium sorbate, potassium carbonate, potassium lactate, potassium norbixin, potassium pyrosulfate, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.
[24] Method according to any of [14] to [23], wherein the calcium is at least one selected from the group consisting of L-calcium ascorbate, calcium alginate, calcium disodium ethylenediaminetetraacetate, calcium chloride, calcium carboxymethyl cellulose, calcium citrate, calcium glycerophosphate, calcium gluconate, L-calcium glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.
[25] Method according to any of [14] to [24], wherein the coffee beverage comprises 25 to 40 mg/100 ml of sodium, comprises 25 to 70 mg/100 ml of potassium and/or 2 mg/100 ml to 25 mg/100 ml of calcium, energy is 50 Kcal/100 ml or less, and X1 + X2 is 6 or more.
[26] A concentrate for providing the coffee beverage according to [1], comprising:
   (a) natural sugar in an amount corresponding to a sweetness intensity X4;
   (b) high-intensity sweetener in an amount corresponding to a sweetness intensity X5;
   (c) 50 mg/100 ml to 900 mg/100 ml of sodium; and
   (d) 150 mg/100 ml to 1000 mg/100 ml of potassium and/or 5 mg/100 ml to 500 mg/100 ml of calcium,
      wherein (X4 + X5) ≤ 200 is satisfied.
[27] A method for enhancing sweetness of a coffee beverage, comprising containing:
   (a) natural sugar in an amount corresponding to a sweetness intensity X1,
   (b) high-intensity sweetener in an amount corresponding to a sweetness intensity X2,
   (c) 5 mg/100 ml to 90 mg/100 ml of sodium, and
   (d) 15 mg/100 ml to 100 mg/100 ml of potassium and/or 0.5 mg/100 ml to 50 mg/100 ml of calcium in the coffee beverage.
[28] A coffee beverage comprising:
   (a) natural sugar in an amount corresponding to a sweetness intensity X1;
   (b) high-intensity sweetener in an amount corresponding to a sweetness intensity X2;
   (c) 5 mg/100 ml to 90 mg/100 ml of sodium; and
   (d) 15 mg/100 ml to 150 mg/100 ml of potassium and/or 0.5 mg/100 ml to 50 mg/100 ml of calcium,
      wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
      0.1 < (X1 + X2) ≤ 20 is satisfied.

### ADVANTAGEOUS EFFECTS OF THE INVENTION

The present invention provides a method for increasing the sweetness of a coffee beverage, which is not a simple sweetness that is obtained by increasing the amounts of natural sugar and high-intensity sweetener used, and providing good taste quality. In addition, the method of the present invention provides a coffee beverage having good taste quality with increased sweetness by a means other than control of the used amounts of sugar and sweetener.

### DESCRIPTION OF EMBODIMENTS

Hereinafter, the present invention will be described in detail. The following embodiments are examples to describe the present invention and do not intend to limit the present invention only to these embodiments. The present invention can be carried out in various embodiments without departing from the spirit of the present invention.

Note that all of the literatures, laid-open publications, patent publications, and other patent literatures cited herein are deemed to be incorporated by reference into the present specification.

In the present specification, for example, the phrase "the content of the A component is X mg/100 ml" means that "X mg of the A component is contained in 100 ml of the beverage". In addition, for example, the phrase "the content of the B component is Y ppm" means that "the B component is contained in Y ppm with respect to the total amount (100 mass%) of the beverage".

### 1. Coffee beverage having improved taste quality exhibited by natural sugar and high-intensity sweetener

The present invention provides, as a first aspect, the following coffee beverage (hereinafter, referred to as "the coffee beverage of the present invention").

A coffee beverage comprising:
(a) natural sugar in an amount corresponding to a sweetness intensity X1;
(b) high-intensity sweetener in an amount corresponding to a sweetness intensity X2;
(c) 5 mg/100 ml to 90 mg/100 ml of sodium; and
(d) 15 mg/100 ml to 100 mg/100 ml of potassium and/or 0.5 mg/100 ml to 50 mg/100 ml of calcium,
   wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
   0.1 < (X1 + X2) ≤ 20 is satisfied.

In the coffee beverage of the present invention, sweetness of a sweetness intensity X3 is exhibited by the above-mentioned components (a) to (d).

That is, in the coffee beverage of the present invention, the components having sweetness are (a) natural sugar in a specific amount and (b) a specific high-intensity sweetener in a specific amount. The calculated sweetness of the coffee beverage of the present invention is supposed to be the total value of the sweetness intensity when the component (a) is added to the coffee beverage and the sweetness intensity when the component (b) is added to the coffee beverage. However, although the concentrations are low, (c) sodium and (d) potassium and/or calcium are present in the coffee beverage. Consequently, the sweetness exhibited by (a) natural sugar and (b) high-intensity sweetener is enhanced, and the coffee beverage of the present invention achieves sweetness exceeding the mere sum of the individual sweetness intensities. The present invention means to possibly include additional components such as a milk component, an acidulant, a flavoring agent, and an extract, in addition to these components (a) to (d). However, the coffee beverage of the present invention does not contain a sweet component other than the components (a) and (b) as a sweetener.

Further, the coffee beverage according to a preferable aspect of the present invention achieves, an effect of improving the taste quality, in addition to an increase in sweetness. For example, in a coffee beverage according to an aspect of the present invention, it is preferable to improve at least one of the intensity of flavor and suppression of odd taste (such as bitter taste and astringent taste). Incidentally, the effect of extracting flavor can be confirmed by not only sensory evaluation but also analysis of the amount of volatilized aroma components by gas chromatography. In addition, in an aspect of the present invention, the flavor of a sparkling beverage can be improved while suppressing an increase in saltiness by increasing the addition amount of K and/or Ca instead of Na.

### Coffee beverage

In the present invention, the term "coffee beverage" refers to a beverage product produced using a coffee component as a raw material. The type of the product is not particularly limited, and examples thereof mainly include "coffee", "coffee beverage", and "coffee-containing soft drink" defined in the "fair competition rules for labeling of coffee beverages and the like" established in 1977. In addition, in also beverages containing a coffee component as a raw material, although a beverage containing a milk solid in an amount of 3.0 mass% or more is a subject to which the "fair competition rules for milk beverage labeling" is applied and is treated as a "milk beverage", such a beverage is encompassed in the scope of the coffee beverage of the present invention.

Here, the coffee component (in the present specification, also referred to as extract of roasted coffee beans) is a solution containing a component derived from a coffee bean, and examples thereof include a coffee extract liquid, i.e. a solution extracted from roasted and ground coffee beans using water, warm water, or the like. In addition, a solution prepared by adjusting, for example, a coffee extract obtained by concentrating a coffee extract liquid or instant coffee obtained by drying a coffee extract liquid to an appropriate amount with water, warm water, or the like is also an example of the coffee component.

The species of the coffee beans that are used in the coffee beverage of the present invention is not particularly limited. Examples of the cultivated tree species include Coffea arabica, Coffea robusta, and Coffea liberica, and examples of the coffee bean variety include Mocha, Brazil, Colombia, Guatemala, Blue Mountain, Kona, Mandolin, and Kilimanjaro. As the coffee beans, one species may be used, or a plurality of species may be used in combination. The roasting method of roasted coffee beans is not particularly limited, the roasting temperature and the roasting environment are also not limited at all, and a usual method can be adopted, but the degree of roasting, L value, of coffee beans is preferably 18 to 24. Furthermore, the extraction method from the roasted coffee beans is also not limited at all, and, for example, a method of extracting from a ground product prepared by coarsely, medium, or finely grinding roasted coffee beans with water or warm water (0°C to 100°C) for 10 seconds to 30 minutes is mentioned. The extraction method may be, for example, a drip type, a siphon type, a boiling type, a jet type, or a continuous type.

The coffee beverage of the present invention may contain a milk component, such as milk, cow's milk, or a dairy product. In addition, the coffee beverage of the present invention may be decaffeinated or contain caffeine, and the concentration of caffeine contained is not particularly limited, but is preferably about 40 mg/100 ml to 100 mg/100 ml. In addition, the concentration of chlorogenic acid in the coffee beverage of the present invention is not particularly limited, but is preferably about 15 to 85 mg/100 ml.

The form of the coffee beverage of the present invention is not limited, and the coffee beverage may be, for example, in a form of a concentrated coffee extract or a beverage in which instant coffee is dissolved or in a form of a packaged coffee beverage packed and sealed in a container, such as a can or a PET bottle.

### Natural Sugar

In the present invention, a "natural sugar", which is represented by the general formula of Cₘ(H₂O)ₙ, wherein m and n independently represent a natural number, contains a D-form carbohydrate, digestible by humans. Examples of the D-form carbohydrate include glucose, sucrose, fructose, maltose, oligosaccharides (for example, fructooligosaccharide, maltooligosaccharide, isomaltooligosaccharide, and galactooligosaccharide), high-fructose corn syrup (isomerized sugars), lactose, psicose, allose, tagatose, and combinations thereof.

Examples of the combination of glucose, sucrose, fructose, maltose, oligosaccharides, high-fructose corn syrup, and lactose include the following. Specifically, the combination includes sucrose and high-fructose corn syrup, sucrose and glucose, sucrose and fructose, sucrose and maltose, sucrose and an oligosaccharide, sucrose and lactose, high-fructose corn syrup and an oligosaccharide, sucrose and psicose; sucrose, high-fructose corn syrup, and glucose; sucrose, high-fructose corn syrup, and fructose; sucrose, high-fructose corn syrup, and maltose; sucrose, high-fructose corn syrup, and an oligosaccharide; sucrose, high-fructose corn syrup, glucose, and an oligosaccharide; sucrose, glucose, fructose, and an oligosaccharides; and glucose, sucrose, fructose, maltose, an oligosaccharide, high-fructose corn syrup, lactose, and tagatose. Further, a sugar derived from a milk component is included in a natural sugar.

Since natural sugars have high energy, the energy (calorie) of the coffee beverage can be greatly reduced by decreasing the content of the natural sugar. The present invention keeps the concentration of the natural sugar low to decrease the energy (i.e. low calorie), but strong sweetness is felt when ingested by a combination of natural sugar, high-intensity sweetener, sodium and potassium and/or calcium. Accordingly, the amount of the natural sugar of a sweetness intensity X1 is preferably an amount of providing an energy of 50 Kcal/100 ml or less. The energy of the coffee beverage of the present invention may be 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 25 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 25 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 25 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 25 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 25 Kcal/100 ml, 25 to 50 Kcal/100 ml, 25 to 45 Kcal/100 ml, 25 to 40 Kcal/100 ml, 25 to 35 Kcal/100 ml, or 25 to 30 Kcal/100 ml, depending on embodiments. The energy of the coffee beverage of the present invention may also be 0 to 32 Kcal/100ml, 0 to 24 Kcal/100ml, 0 to 8 Kcal/100ml, 0 to 4 Kcal/100ml, 4 to 32 Kcal/100ml, 4 to 24 Kcal/100ml, 4 to 8 Kcal/100ml, 8 to 32 Kcal/100ml, 8 to 24 Kcal/100ml, or 24 to 32 Kcal/100ml, depending on embodiments. When a high calorie component such as a milk component, a total calorie of a natural sugar and a component such as a milk component is preferably 50 Kcal/100ml or less.

Additionally, X1 of "the sweetness intensity X1" may be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, or 2.5 to 10.0.

X1 may also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0.

The amount corresponding to the sweetness intensity X1 of the natural sugar refers to an amount (a concentration) that exhibits the sweetness of the sweetness intensity X1 under conditions where the natural sugar is dissolved in water at 20°C having a volume equivalent to that of the coffee beverage of the present invention.

Here, the sweetness intensity means sweetness exhibited by a substance. For example, in the case where the sweetness intensity exhibited by sucrose per unit concentration Brix 1 is defined as a degree of sweetness of 1, glucose has a degree of sweetness of 0.6 to 0.7 (center value: 0.65). A numerical value obtained by multiplying this degree of sweetness by the concentration Brix value of glucose is the sweetness intensity of glucose. Thus, when the concentration of glucose is Brix 1.5, the sweetness intensity of glucose is 0.65 × 1.5 = 0.975. When calculating the sweetness intensity in the present invention, the sweetness intensity of a sugar showing a range in the degree of sweetness, the center value is used unless otherwise noted.

**Table 1**

| Sugar (D-form) | Degree of sweetness |
|---|---|
| Sucrose | 1 |
| Glucose | 0.6 to 0.7 |
| Fructose | 1.3 to 1.7 |
| Maltose | 0.4 |
| Fructooligosaccharide | 0.6 |
| Maltooligosaccharide | 0.3 |
| Isomaltooligosaccharide | 0.4 to 0.5 |
| Galactooligosaccharide | 0.7 |
| Isomerized sugar | 0.8 to 0.9 |
| Lactose | 0.2 to 0.3 |
| Psicose | 0.7 |
| Allose | 0.8 |
| Tagatose | 0.9 |

### High-Intensity Sweetener

In the present invention, the "high-intensity sweetener" refers to a compound having sweetness more intense than that of sucrose, and may be a naturally occurring compound, a synthetic compound, and a combination of a naturally occurring compound and a synthetic compound. The high-intensity sweetener, in an amount equivalent to sucrose, exhibits sweetness 5 times or more, 10 times or more, 50 times or more, 100 times or more, 500 times or more, 1000 times or more, 5000 times or more, 10000 times or more, 50000 times or more, or 100000 times or more as that of sucrose. The high-intensity sweetener exhibits extremely intense sweetness in this way. When the existence of the natural sugar and high-intensity sweetener in the food or beverage of the present invention is expressed in a weight ratio, "natural sugar:high-intensity sweetener" is 5:1 to 10:1, 50:1 to 100:1, 50:1 to 200:1, 500:1 to 1000:1, 5000:1 to 10000:1, and 50000:1 to 100000:1.

In the present invention, as the high-intensity sweetener, at least one high-intensity sweetener b1 selected from the group consisting of rebaudioside M, rebaudioside D, rebaudioside N, rebaudioside O, rebaudioside E, Luo han guo extract, mogroside V, and thaumatin is used.

The content of the high-intensity sweetener b1 based on the total amount (100 mass%) of the high-intensity sweetener as the component (b) is preferably 50 mass% or more, more preferably 60 mass% or more, further preferably 70 mass% or more, more further preferably 80 mass% or more, and particularly preferably 90 mass% or more. In an aspect of the present invention, the high-intensity sweetener as the component (b) may substantially consist of the high-intensity sweetener b1. In the present specification, the phrase "substantially consist of the high-intensity sweetener b1" means that impurities, such as other steviol glycoside and mogroside, which are inevitably included in the process (e.g. purification of a stevia extract or a Luo han guo extract or biosynthesis) of preparing the high-intensity sweetener b1 may be included.

Rebaudioside M, rebaudioside D, rebaudioside N, rebaudioside O, and rebaudioside E may be directly extracted from stevia or may be obtained by attaching glucose to a compound having another structure contained in a stevia extract.

The Luo han guo extract as a sweetener is an extract of Luo han guo containing a sweet substance derived from Luo han guo, and has been approved as a food additive in various countries including Japan and is commercially available. Examples of the sweet substance derived from Luo han guo include mogroside V, mogroside IV, 11-oxo-mogroside V, and Siamenoside I.

Mogroside V is one of the major mogrol glycosides contained in Luo han guo, and it has been reported that it has a good-quality sweetness property close to sucrose when compared with rebaudioside A. In addition, the degree of sweetness of mogroside V is about 300 times that of sucrose (Murata Y. et al., Nippon Shokuhin Kagaku Kogaku Kaishi, Vol. 53, No. 10, 527 to 533, (2006)). Mogroside V can be obtained from a Luo han guo extract (e.g. an alcohol extract of Luo han guo) through purification by chromatography or the like. Alternatively, mogroside V may be obtained by attaching glucose to a compound having another structure contained in a Luo han guo extract.

The Luo han guo extract preferably contains mogroside V and the ratio thereof is not limited and can be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more, and 75 wt% or more, of the total dry weight of a Luo han guo extract. The content of mogroside V can be determined by a known technique such as liquid chromatography. The Luo han guo extract can be obtained by extracting a fruit of Luo han guo (Siraitia grosvenorii) with a suitable solvent (for example, an aqueous solvent such as water, an alcohol solvent such as ethanol or methanol, a mixed solvent of an aqueous solvent and an alcohol solvent such as water-containing ethanol or water-containing methanol), and then optionally carrying out a treatment such as degreasing, purification, concentration, and drying.

Mogroside V may be one having a high purity, for example, a purity of 80% or more, 85% or more, 90% or more, 91% or more, 92% or more, 93% or more, 94% or more, 95% or more, 96% or more, 97% or more, or 98% or more. In mogroside V obtained by purifying a Luo han guo extract, understandably, the amount of Luo han guo extract components other than mogroside V is decreased with an increase in purity.

Thaumatin is a protein-based sweetener extracted from a plant.

In the present invention, an optional high-intensity sweetener b2 may be used in combination with the above-described high-intensity sweetener b1, as needed. Specific examples of the optional high-intensity sweetener b2 include peptide-based sweeteners, such as aspartame, neotame, and alitame; sucrose derivatives, such as sucralose; synthetic sweeteners, such as acesulfame K, saccharine, advantame, cyclamate, and dulcin; protein-based sweeteners extracted from plants, such as monellin, curculin, and brazzein, other than thaumatin; high-intensity sweeteners other than protein-based sweetener extracted from plants; tourmaline; and neohesperidin dihydrochalcone.

The sucrose derivative is that obtained by substituting the OH group or the H group of sucrose with another substituent, and examples thereof include halogen derivatives of sucrose (sucralose), oxathiazinonedioxide derivatives, sugar alcohols, aldonic acid, and uronic acid.

Examples of the high-intensity sweetener other than the protein-based sweeteners extracted from plants include sweeteners present in a stevia extract, other than rebaudioside M, rebaudioside D, rebaudioside N, rebaudioside O, and rebaudioside E; sweeteners present in a Luo han guo extract, other than mogroside V; sweeteners present in a Glycyrrhiza extract; and glycosides thereof, and also include monatin and glycyrrhizin.

Examples of the sweetener present in a stevia extract, other than rebaudioside M, rebaudioside D, rebaudioside N, rebaudioside O, and rebaudioside E and the glycoside thereof include steviol, stevioside, rebaudioside A, rebaudioside B, and rebaudioside C.

Examples of the sweetener present in a Luo han guo extract, other than mogroside V and the glycoside thereof include mogroside IV.

The Glycyrrhiza extract refers to that obtained from roots or rhizomes of Glycyrrhiza uralensis Fisher, Glycyrrhiza inflata Batalin, or Glycyrrhiza glabra Linne and having glycyrrhizic acid as a main component. Examples of the Glycyrrhiza extract include a Glycyrrhiza extract, glycyrrhizin, and a licorice extract.

In the present invention, the high-intensity sweetener b1 is suitable at least one selected from the group consisting of rebaudioside M, rebaudioside D, Luo han guo extract, mogroside V, and combinations thereof. In particular, rebaudioside D, rebaudioside M, or a mixture of rebaudioside D and rebaudioside M is suitable as the high-intensity sweetener b1.

Rebaudioside D and rebaudioside M have less negative flavor, such as astringent taste and metallic taste, which is observed in rebaudioside A and have characteristics, such as good-quality sweetness, and they are expected to be used in the fields of food and drink (NIPPON KAGAKU KAISHI, (5), (1981), 726-735, "Sweet Diterpene-Glycoside of Leaves of Stevia rebaudiana Bertoni Synthesis and Structure-Sweetness Relationship of Rebaudiosides-A, -D, -E and Their Related glycosides", Kasai, Kaneda, Tanaka, Yamasaki, Sakamoto, Morimoto, Okada, Kitahata, and Furukawa). Thus, rebaudioside D and rebaudioside M when used alone are excellent in that they have less odd taste compared to rebaudioside A and sweetness close to sucrose. Rebaudioside D and rebaudioside M each have sweetness about 200 times that of sucrose.

Examples of the combination of the high-intensity sweeteners b1 and the combination of the high-intensity sweetener b1 and the optional high-intensity sweetener b2 include the following. Specifically, the examples include combinations of rebaudioside D and rebaudioside M; rebaudioside D and rebaudioside A; rebaudioside M and rebaudioside A; rebaudioside M and mogroside V; rebaudioside D and mogroside V; rebaudioside D and advantame; rebaudioside D and acesulfame K; rebaudioside D and sucralose; rebaudioside M, rebaudioside D, and rebaudioside A; rebaudioside M, rebaudioside D, and mogroside V; rebaudioside M, rebaudioside D, and advantame; rebaudioside M, rebaudioside D, and acesulfame K; rebaudioside M, rebaudioside D, and sucralose; rebaudioside A, rebaudioside M, rebaudioside D, and mogroside V; rebaudioside A, rebaudioside M, mogroside V, and sucralose; rebaudioside D, rebaudioside M, mogroside V, and acesulfame K; rebaudioside M, rebaudioside A, mogroside V, and neohesperidin dihydrochalcone; and rebaudioside M, rebaudioside D, sucralose, neohesperidin dihydrochalcone, and brazzein.

In addition, the examples include combinations of rebaudioside D and mogroside V; rebaudioside D and Luo han guo extract; rebaudioside M and Luo han guo extract; rebaudioside M, rebaudioside D, and Luo han guo extract; rebaudioside A, rebaudioside M, rebaudioside D, and Luo han guo extract; rebaudioside A, rebaudioside M, Luo han guo extract, and sucralose; rebaudioside D, rebaudioside M, Luo han guo extract, and acesulfame K; and rebaudioside M, rebaudioside A, Luo han guo extract, and neohesperidin dihydrochalcone.

X2 of "the sweetness intensity X2" may be 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, or 4.0 to 11.5.

X2 may also be 0.05 to 6.0, 0.05 to 6.5, 0.05 to 7.0, 0.05 to 7.5, 0.05 to 8.0, 0.05 to 8.5, 0.05 to 9.0, 0.05 to 9.5, 0.05 to 10.0, 0.05 to 10.5, 0.05 to 11.0, 0.05 to 11.5, 0.05 to 12.0, 0.05 to 13.0, 0.05 to 14.0, 0.05 to 15.0, 0.05 to 16.0, 0.05 to 17.0, 0.05 to 18.0, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0, or 4.0 to 18.0.

The amount corresponding to a sweetness intensity X2 of a high-intensity sweetener refers to an amount which provides sweetness of a sweetness intensity X2 under the conditions when the high-intensity sweetener is dissolved in water having the same volume as the coffee beverage of the present invention at 20°C.

As in natural sugar, also here, the sweetness intensity means the sweetness exhibited by a substance. For example, when the sweetness intensity exhibited by sucrose per unit concentration Brix 1 is defined as a degree of sweetness of 1, the degree of sweetness of rebaudioside D is 200 to 250 (center value 225), the degree of sweetness of rebaudioside M is 200 to 260 (center value 230), the degree of sweetness of rebaudioside N is 200 to 250 (center value 225), the degree of sweetness of rebaudioside O is 200 to 250 (center value 225), the degree of sweetness of rebaudioside E is 70 to 80 (center value 75), the degree of sweetness of a Luo han guo extract is 110 to 150 (center value 130), the degree of sweetness of mogroside V is 240 to 300 (center value 270), and the degree of sweetness of thaumatin is 2,000. The numerical value obtained by multiplying these degrees of sweetness by the concentration (w/v% (considered to be the same as w/w% in the case of a beverage)) of the high-intensity sweetener in the coffee beverage is the sweetness intensity of the high-intensity sweetener. When calculating the sweetness intensity in the present invention, the sweetness intensity of a high-intensity sweetener showing a range in the degree of sweetness, the center value is used unless otherwise noted.

Further, the amount of high-intensity sweetener can be P2 ppm and P2 ppm herein refers to an amount corresponding to a sweetness intensity X2. The P2 herein can be a value of 20 to 550, 25 to 550, 30 to 550, 35 to 550, 40 to 550, 45 to 550, 50 to 550, 55 to 550, 20 to 540, 25 to 540, 30 to 540, 35 to 540, 40 to 540, 45 to 540, 50 to 540, 55 to 540, 20 to 530, 25 to 530, 30 to 530, 35 to 530, 40 to 530, 45 to 530, 50 to 530, 55 to 530, 20 to 520, 25 to 520, 30 to 520, 35 to 520, 40 to 520, 45 to 520, 50 to 520, 55 to 520, 20 to 510, 25 to 510, 30 to 510, 35 to 510, 40 to 510, 45 to 510, 50 to 510, 55 to 510, 20 to 505, 25 to 505, 30 to 505, 35 to 505, 40 to 505, 45 to 505, 50 to 505, 55 to 505, 20 to 500, 25 to 500, 30 to 500, 35 to 500, 40 to 500, 45 to 500, 50 to 500, 55 to 500, 20 to 495, 25 to 495, 30 to 495, 35 to 495, 40 to 495, 45 to 495, 50 to 495, 55 to 495, 20 to 490, 25 to 490, 30 to 490, 35 to 490, 40 to 490, 45 to 490, 50 to 490, or 55 to 490.

The P2 can also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

### Sodium

The present invention contains (c) 5 mg/100 ml to 90 mg/100 ml of sodium, which means that the amount of sodium atoms is 5 mg/100 ml to 90 mg/100 ml of sodium. The amount of sodium may be the amount of 5 to 90mg/100ml, 5 to 85mg/100ml, 5 to 80mg/100ml, 5 to 75mg/100ml, 5 to 70mg/100ml, 5 to 65mg/100ml, 5 to 60mg/100ml, 5 to 55mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10 to 90mg/100ml, 10 to 85mg/100ml, 10 to 80mg/100ml, 10 to 75mg/100ml, 10 to 70mg/100ml, 10 to 65mg/100ml, 10 to 60mg/100ml, 10 to 55mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 90mg/100ml, 20 to 85mg/100ml, 20 to 80mg/100ml, 20 to 75mg/100ml, 20 to 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 90mg/100ml, 25 to 85mg/100ml, 25 to 80mg/100ml, 25 to 75mg/100ml, 25 to 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, 25 to 30mg/100ml, 30 to 90mg/100ml, 30 to 85mg/100ml, 30 to 80mg/100ml, 30 to 75mg/100ml, 30 to 70mg/100ml, 30 to 65mg/100ml, 30 to 60mg/100ml, 30 to 55mg/100ml, 30 to 50mg/100ml, 30 to 45mg/100ml, 30 to 40mg/100ml, 30 to 35mg/100ml, 35 to 90mg/100ml, 35 to 85mg/100ml, 35 to 80mg/100ml, 35 to 75mg/100ml, 35 to 70mg/100ml, 35 to 65mg/100ml, 35 to 60mg/100ml, 35 to 55mg/100ml, 35 to 50mg/100ml, 35 to 45mg/100ml, 35 to 40mg/100ml, 40 to 90mg/100ml, 40 to 85mg/100ml, 40 to 80mg/100ml, 40 to 75mg/100ml, 40 to 70mg/100ml, 40 to 65mg/100ml, 40 to 60mg/100ml, 40 to 55mg/100ml, 40 to 50mg/100ml, or 40 to 45mg/100ml, depending on embodiments.

The amount of sodium may be the amount of 5 to 34mg/100ml, 5 to 33mg/100ml, 5 to 32mg/100ml, 5 to 31mg/100ml, 5 to 29mg/100ml, 5 to 22mg/100ml, 5 to 21mg/100ml, 10 to 34mg/100ml, 10 to 33mg/100ml, 10 to 32mg/100ml, 10 to 31mg/100ml, 10 to 29mg/100ml, 10 to 22mg/100ml, 10 to 21mg/100ml, 11.5 to 34mg/100ml, 11.5 to 33mg/100ml, 11.5 to 32mg/100ml, 11.5 to 31mg/100ml, 11.5 to 30mg/100ml, 11.5 to 29mg/100ml, 11.5 to 22mg/100ml, 11.5 to 21mg/100ml, 11.5 to 20mg/100ml, 11.5 to 19mg/100ml, 11.5 to 18mg/100ml, 11.5 to 17mg/100ml, 11.5 to 16mg/100ml, 11.5 to 15mg/100ml, 11.5 to 14mg/100ml, 11.5 to 13mg/100ml, 11.5 to 12mg/100ml, 5.75 to 34.5mg/100ml, 5.75 to 28.75mg/100ml, 5.75 to 23mg/100ml, 5.75 to 17.25mg/100ml, 5.75 to 11.5mg/100ml, 11.5 to 34.5mg/100ml, 11.5 to 28.75mg/100ml, 11.5 to 23mg/100ml, 11.5 to 17.25mg/100ml, 17.25 to 34.5mg/100ml, 17.25 to 28.75mg/100ml, 17.25 to 23mg/100ml, 23 to 34.5mg/100ml, 23 to 28.75mg/100ml, or 28.75 to 34.5mg/100ml, depending on embodiments.

In addition, the amount of sodium that is added to a coffee beverage may be 0.1 to 50 mg/100 ml, 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 to 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 to 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 10 to 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 to 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 to 50 mg/100 ml, 20 to 45 mg/100 ml, 20 to 40 mg/100 ml, 20 to 35 mg/100 ml, 20 to 30 mg/100 ml, 20 to 25 mg/100 ml, 25 to 50 mg/100 ml, 25 to 45 mg/100 ml, 25 to 40 mg/100 ml, 25 to 35 mg/100 ml, or 25 to 30 mg/100 ml.

Forms of sodium is not particularly limited provided that sodium in an ingestible state is contained in the coffee beverage of the present invention, and may be in at least one form selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptanoate, sodium gluconate, sodium glutamate, sodium tartrate, sodium aspartate, sodium lactate, sodium caseinate, sodium ascorbate, and mixtures thereof, for example. In addition, sodium is also contained in coffee beans in some cases, and in such a case, sodium obtained when extracting coffee from coffee beans is included in the sodium contained in the coffee beverage of the present invention. In addition, when the pH of an extract liquid is adjusted using a pH adjuster in extraction of coffee, sodium contained in the pH adjuster is also included in the sodium in the coffee beverage. In addition, when a coffee beverage contains a milk component, such as milk, cow's milk, or a dairy product, sodium contained in the milk component is also encompassed. In an aspect of the present invention, sodium derived from a sodium component that is used as a preservative (e.g. sodium benzoate, sodium sulfite, sodium hyposulfite, sodium dehydroacetate, sodium pyrosulfite, or sodium propionate) is not substantially included in the component (c).

In the present specification, the sodium content in a beverage can be measured by atomic absorption spectrometry. Incidentally, when the amount of a sodium-containing compound contained in the beverage is known, the value calculated from the amount may be used.

### Potassium

The present invention may contain (d) 15 mg/100 ml to 100 mg/100 ml of potassium, which means that the amount of potassium atoms is 15 mg/100 ml to 100 mg/100 ml of potassium. The amount of potassium may be the amount of 15 to 100mg/100ml, 15 to 95mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 100mg/100ml, 20 to 95mg/100ml, 20 to 90mg/100ml, 20 to 85mg/100ml, 20 to 80mg/100ml, 20 to 75mg/100ml, 20 to 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 100mg/100ml, 25 to 95mg/100ml, 25 to 90mg/100ml, 25 to 85mg/100ml, 25 to 80mg/100ml, 25 to 75mg/100ml, 25 to 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, 25 to 30mg/100ml, 30 to 100mg/100ml, 30 to 95mg/100ml, 30 to 90mg/100ml, 30 to 85mg/100ml, 30 to 80mg/100ml, 30 to 75mg/100ml, 30 to 70mg/100ml, 30 to 65mg/100ml, 30 to 60mg/100ml, 30 to 55mg/100ml, 30 to 50mg/100ml, 30 to 45mg/100ml, 30 to 40mg/100ml, 30 to 35mg/100ml, 35 to 100mg/100ml, 35 to 95mg/100ml, 35 to 90mg/100ml, 35 to 85mg/100ml, 35 to 80mg/100ml, 35 to 75mg/100ml, 35 to 70mg/100ml, 35 to 65mg/100ml, 35 to 60mg/100ml, 35 to 55mg/100ml, 35 to 50mg/100ml, 35 to 45mg/100ml, 35 to 40mg/100ml, 40 to 100mg/100ml, 40 to 95mg/100ml, 40 to 90mg/100ml, 40 to 85mg/100ml, 40 to 80mg/100ml, 40 to 75mg/100ml, 40 to 70mg/100ml, 40 to 65mg/100ml, 40 to 60mg/100ml, 40 to 55mg/100ml, 40 to 50mg/100ml, or 40 to 45mg/100ml, depending on embodiments.

In addition, the amount of potassium that is added to a coffee beverage may be 0.1 to 50mg/100ml, 0.1 to 45mg/100ml, 0.1 to 40mg/100ml, 0.1 to 35mg/100ml, 0.1 to 30mg/100ml, 0.1 to 25mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 1 to 50mg/100ml, 1 to 45mg/100ml, 1 to 40mg/100ml, 1 to 35mg/100ml, 1 to 30mg/100ml, 1 to 25mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100ml, 1 to 12mg/100ml, 1 to 11mg/100ml, 1 to 10mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 50mg/100ml, 25 to 45mg/100ml, 25 to 40mg/100ml, 25 to 35mg/100ml, or 25 to 30mg/100ml.

The form of potassium is not particularly limited as long as it is contained in the coffee beverage of the present invention in an ingestible state. For example, the form may be at least one form selected from the group consisting of potassium alginate, potassium chloride, potassium citrate, potassium gluconate, L-potassium glutamate, potassium bromate, DL-potassium hydrogen tartrate, L-potassium hydrogen tartrate, potassium nitrate, potassium hydroxide, potassium sorbate, potassium carbonate, potassium lactate, potassium norbixin, potassium pyrosulfate, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof. In addition, potassium is also contained in coffee beans in some cases, and in such a case, potassium obtained when extracting coffee from coffee beans is also encompassed in the potassium contained in the coffee beverage of the present invention. In addition, when a coffee beverage contains a milk component, such as milk, cow's milk, or a dairy product, potassium contained in the milk component is also encompassed.

In the present specification, the content of potassium in a beverage can be measured by atomic absorption spectrometry. Incidentally, when the amount of a potassium-containing compound contained in the beverage is known, the value calculated from the amount may be used.

### Calcium

The present invention may contain (d) 0.5 mg/100 ml to 50 mg/100 ml of calcium, which means that the amount of calcium atoms is 0.5 mg/100 ml to 50 mg/100 ml of calcium. The amount of calcium may be the amount of 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 15mg/100ml, 0.5 to 10mg/100ml, 0.5 to 5mg/100ml, 0.5 to 4mg/100ml, 0.5 to 3mg/100ml, 0.5 to 2mg/100ml, 0.5 to 1mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 15mg/100ml, 5 to 10mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, or 10 to 15mg/100ml, depending on embodiments.

In addition, the amount of calcium that is added to a coffee beverage may be 0.1 to 40mg/100ml, 0.1 to 35mg/100ml, 0.1 to 30mg/100ml, 0.1 to 25mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 1 to 40mg/100ml, 1 to 35mg/100ml, 1 to 30mg/100ml, 1 to 25mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100ml, 1 to 12mg/100ml, 1 to 11mg/100ml, 1 to 10mg/100ml, 2 to 40mg/100ml, 2 to 35mg/100ml, 2 to 30mg/100ml, 2 to 25mg/100ml, 2 to 20mg/100ml, 2 to 19mg/100ml, 2 to 18mg/100ml, 2 to 17mg/100ml, 2 to 16mg/100ml, 2 to 15mg/100ml, 2 to 14mg/100ml, 2 to 13mg/100ml, 2 to 12mg/100ml, 2 to 11mg/100ml, 2 to 10mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 40mg/100ml, 15 to 35mg/100ml, 15 to 30mg/100ml, 15 to 25mg/100ml, 15 to 20mg/100ml, 20 to 40mg/100ml, 20 to 35mg/100ml, 20 to 30mg/100ml, 20 to 25mg/100ml, 25 to 40mg/100ml, 25 to 35mg/100ml, or 25 to 30mg/100ml.

The form of calcium is not particularly limited as long as it is contained in the coffee beverage of the present invention in an ingestible state. For example, the form may be at least one form selected from the group consisting of L-calcium ascorbate, calcium alginate, calcium disodium ethylenediaminetetraacetate, calcium chloride, calcium carboxymethyl cellulose, calcium citrate, calcium glycerophosphate, calcium gluconate, L-calcium glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof. In addition, calcium is also contained in coffee beans and water (in particular, hard water) in some cases, and in such a case, calcium obtained when extracting coffee from coffee beans is also encompassed in the calcium contained in the coffee beverage of the present invention. In addition, when a coffee beverage contains a milk component, such as milk, cow's milk, or a dairy product, calcium contained in the milk component is also encompassed.

Incidentally, for example, when an additive containing two or more atoms selected from sodium, potassium, and calcium, such as calcium disodium ethylenediaminetetraacetate, is added, the amount thereof is adjusted such that the amounts of sodium, potassium, and calcium are within the above-mentioned ranges.

In the present specification, the content of calcium in a beverage can be measured by ICP emission spectrometry. Incidentally, when the amount of a calcium-containing compound contained in the beverage is known, the value calculated from the amount may be used.

The coffee beverage of the present invention has an enhanced sweetness as having been already mentioned. Whether or not the sweetness of the coffee beverage of the present invention is enhanced can be evaluated by panelists who have received sensory training. Further, for the sweetness intensity X3 of the coffee beverage of the present invention, standard coffee beverages to be the sweetness standards are prepared with sucrose concentrations assigned as sweetness intensities 1, 2, 3, 4, 5, 6, 7, 8, 9, 10, 11, 12, 13, 14, and 15 and panelists compare the sweetness of the coffee beverage of the present invention with the sweetnesses of these standard coffee beverages thereby to measure the sweetness of the coffee beverage of the present invention. Note that the standard coffee beverages having a sweetness intensity of 1, 2, ... 15 are prepared by adding sucrose in such a way that a sucrose content is 1 g/100 g, 2 g/100 g, ... 15 g/100 g to the coffee beverage to which sucrose is not added.

Furthermore, of the standard coffee beverages having a lower sweetness than the coffee beverage of the present invention in the above measurement, the standard coffee beverage having the closest sweetness to that of the coffee beverage of the present invention is selected and adjusted in such a way as to have the same sweetness as that of the coffee beverage of the present invention by adding sucrose to the selected standard coffee beverage, during which a sweetness intensity X3 of the coffee beverage of the present invention can also be measured from a sucrose content in the adjusted standard coffee beverage.

Other examples of the method for measuring a sweetness of the coffee beverage of the present invention include a sweetness intensity rating using Visual Analogue Scale (VAS method). For the VAS method, literatures in The journal of Japanese Society of Stomatognathic Function (2014) 20 pp. 115-129 ("Construction of a Screening Test for Gustatory Function in Four Basic Tastes" by Toyota et al.) and the like can be referred. Specifically, in the measurement of sweetness intensity by the VAS method, for example, evaluators define sweetness intensities as "not sweet at all" at the lower end and "nothing is sweeter than this" at the upper end and, using a piece of paper on which a vertical line indicating the intensities of sweetness on the straight line, assess a sweetness intensity sensed at that time by showing a position on the straight line.

X3 may be 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. Alternatively, X3 may be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

In a certain embodiment, the coffee beverage of the present invention is a coffee beverage comprising:
(a) natural sugar in an amount corresponding to a sweetness intensity X1 of 0.1 to 5;
(b) high-intensity sweetener in an amount corresponding to a sweetness intensity X2 of 0.1 to 5;
(c) 5 mg/100 ml to 90 mg/100 ml of sodium; and
(d) 15 mg/100 ml to 100 mg/100 ml of potassium and/or 0.5 mg/100 ml to 50 mg/100 ml of calcium,
   wherein sweetness of a sweetness intensity X3 of 5.5 to 12.5 is exhibited by the components (a) to (d).

In another embodiment, the coffee beverage of the present invention is a coffee beverage comprising:
(a) natural sugar in an amount corresponding to a sweetness intensity X1 of 3 to 5;
(b) high-intensity sweetener in an amount corresponding to a sweetness intensity X2 of 1 to 5;
(c) 25 to 40 mg/100 ml of sodium; and
(d) 25 mg/100 ml to 70 mg/100 ml of potassium and/or 2 mg/100 ml to 25 mg/100 ml of calcium,
   wherein sweetness of a sweetness intensity X3 of 5.5 to 12.5 is exhibited by the components (a) to (d). Preferably, the coffee beverage of the present invention further has an energy of 50 Kcal/100 ml or less, and X1 + X2 is 6 or more.

In the coffee beverage of the present invention, the sweetness intensity X1 of the natural sugar, the sweetness intensity X2 of the high-intensity sweetener, the sodium content, the content of potassium and/or calcium, the sweetness intensity X3 exhibited by the coffee beverage, and the energy of the coffee beverage may be any values as long as 0.1 < (X1 + X2) ≤ 20 is satisfied. For example, it is also possible to combine any of the numerical values of the following sweetness intensity X1, sweetness intensity X2, the sodium content, the content of potassium and/or calcium, sweetness intensity X3, and energy.

"The sweetness intensity X1": 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.5 to 2.0, 1.5 to 2.5, 1.5 to 3.0, 1.5 to 3.5, 1.5 to 4.0, 1.5 to 4.5, 1.5 to 5.0, 2.0 to 2.5, 2.0 to 3.0, 2.0 to 3.5, 2.0 to 4.0, 2.0 to 4.5, 2.0 to 5.0, 2.5 to 3.0, 2.5 to 3.5, 2.5 to 4.0, 2.5 to 4.5, 2.5 to 5.0, 3.0 to 3.5, 3.0 to 4.0, 3.0 to 4.5, or 3.0 to 5.0.

"The sweetness intensity X2": 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.5 to 2.0, 1.5 to 2.5, 1.5 to 3.0, 1.5 to 3.5, 1.5 to 4.0, 1.5 to 4.5, 1.5 to 5.0, 2.0 to 2.5, 2.0 to 3.0, 2.0 to 3.5, 2.0 to 4.0, 2.0 to 4.5, 2.0 to 5.0, 2.5 to 3.0, 2.5 to 3.5, 2.5 to 4.0, 2.5 to 4.5, 2.5 to 5.0, 3.0 to 3.5, 3.0 to 4.0, 3.0 to 4.5, or 3.0 to 5.0.

"The amount of sodium": 5 to 90mg/100ml, 5 to 85mg/100ml, 5 to 80mg/100ml, 5 to 75mg/100ml, 5 to 70mg/100ml, 5 to 65mg/100ml, 5 to 60mg/100ml, 5 to 55mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10 to 90mg/100ml, 10 to 85mg/100ml, 10 to 80mg/100ml, 10 to 75mg/100ml, 10 to 70mg/100ml, 10 to 65mg/100ml, 10 to 60mg/100ml, 10 to 55mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, or 15 to 20mg/100ml.

"The amount of potassium": 15 to 100mg/100ml, 15 to 95mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 100mg/100ml, 20 to 95mg/100ml, 20 to 90mg/100ml, 20 to 85mg/100ml, 20 to 80mg/100ml, 20 to 75mg/100ml, 20 to 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 100mg/100ml, 25 to 95mg/100ml, 25 to 90mg/100ml, 25 to 85mg/100ml, 25 to 80mg/100ml, 25 to 75mg/100ml, 25 to 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, 25 to 30mg/100ml, 30 to 100mg/100ml, 30 to 95mg/100ml, 30 to 90mg/100ml, 30 to 85mg/100ml, 30 to 80mg/100ml, 30 to 75mg/100ml, 30 to 70mg/100ml, 30 to 65mg/100ml, 30 to 60mg/100ml, 30 to 55mg/100ml, 30 to 50mg/100ml, 30 to 45mg/100ml, 30 to 40mg/100ml, 30 to 35mg/100ml, 35 to 100mg/100ml, 35 to 95mg/100ml, 35 to 90mg/100ml, 35 to 85mg/100ml, 35 to 80mg/100ml, 35 to 75mg/100ml, 35 to 70mg/100ml, 35 to 65mg/100ml, 35 to 60mg/100ml, 35 to 55mg/100ml, 35 to 50mg/100ml, 35 to 45mg/100ml, 35 to 40mg/100ml, 40 to 100mg/100ml, 40 to 95mg/100ml, 40 to 90mg/100ml, 40 to 85mg/100ml, 40 to 80mg/100ml, 40 to 75mg/100ml, 40 to 70mg/100ml, 40 to 65mg/100ml, 40 to 60mg/100ml, 40 to 55mg/100ml, 40 to 50mg/100ml, or 40 to 45mg/100ml.

"The amount of calcium": 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 15mg/100ml, 0.5 to 10mg/100ml, 0.5 to 5mg/100ml, 0.5 to 4mg/100ml, 0.5 to 3mg/100ml, 0.5 to 2mg/100ml, 0.5 to 1mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 15mg/100ml, 5 to 10mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, or 10 to 15mg/100ml.

"The sweetness intensity X3": 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12. 5, 5.0 to 10, 5.5 to 20, 5.5 to 15, 5.5 to 12.5, 5.5 to 10, 6.0 to 20, 6.0 to 15, 6.0 to 12. 5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5.

The energy: 0 to 50Kcal/100ml, 0 to 45Kcal/100ml, 0 to 40Kcal/100ml, 0 to 35Kcal/100ml, 0 to 30Kcal/100ml, 0 to 25Kcal/100ml, 0 to 20Kcal/100ml, 0 to 15Kcal/100ml, 0 to 10Kcal/100ml, 0 to 5Kcal/100ml, 5 to 50Kcal/100ml, 5 to 45Kcal/100ml, 5 to 40Kcal/100ml, 5 to 35Kcal/100ml, 5 to 30Kcal/100ml, 5 to 25Kcal/100ml, 5 to 20Kcal/100ml, 5 to 15Kcal/100ml, 5 to 10Kcal/100ml, 10 to 50Kcal/100ml, 10 to 45Kcal/100ml, 10 to 40Kcal/100ml, 10 to 35Kcal/100ml, 10 to 30Kcal/100ml, 10 to 25Kcal/100ml, 10 to 20Kcal/100ml, 10 to 15Kcal/100ml, 15 to 50Kcal/100ml, 15 to 45Kcal/100ml, 15 to 40Kcal/100ml, 15 to 35Kcal/100ml, 15 to 30Kcal/100ml, 15 to 25Kcal/100ml, 15 to 20Kcal/100ml, 20 to 50Kcal/100ml, 20 to 45Kcal/100ml, 20 to 40Kcal/100ml, 20 to 35Kcal/100ml, 20 to 30Kcal/100ml, 20 to 25Kcal/100ml, 25 to 50Kcal/100ml, 25 to 45Kcal/100ml, 25 to 40Kcal/100ml, 25 to 35Kcal/100ml, or 25 to 30Kcal/100ml.

In addition, in the present invention, the sweetness intensity X1 of the natural sugar, the sweetness intensity X2 of the high-intensity sweetener, the sodium content, the content of potassium and/or calcium, the sweetness intensity X3 exhibited by the coffee beverage, and the energy of the coffee beverage are not limited to the combinations of the above-mentioned numerical values, and any of the numerical values of the sweetness intensity X1, the sweetness intensity X2, the sodium content, the content of potassium and/or calcium, the sweetness intensity X3, and the energy described in the present specification can be combined within a range of satisfying 0.1 < (X1 + X2) ≤ 20.

The coffee beverage of the present invention can appropriately contain, for example, an antioxidant (e.g. sodium erythorbate), an emulsifier (e.g. sucrose esters of fatty acids, sorbitan esters of fatty acids, and polyglycerin esters of fatty acids), and a flavoring agent (e.g. a coffee flavoring agent), as long as the effects of the present invention are not impaired.

In a specific aspect, the present invention provides the following coffee beverage (hereinafter, referred to as "the coffee beverage A of the present invention").

A coffee beverage comprising:
(a) natural sugar in an amount corresponding to a sweetness intensity X1;
(b) high-intensity sweetener selected from the group consisting of rebaudioside M, rebaudioside D, and combinations thereof in an amount corresponding to a sweetness intensity X2;
(c) 5 to 90 mg/100 ml of sodium; and
(d) 15 mg/100 ml to 100 mg/100 ml of potassium and/or 0.5 mg/100 ml to 50 mg/100 ml of calcium
   wherein sweetness of a sweetness intensity X3 is exhibited by the components (a) to (d), and 0.1 < (X1 + X2) ≤ 20 is satisfied.

In the coffee beverage A of the present invention, preferable ranges of the sweetness intensity X1, the sweetness intensity X2, the sodium content, the content of potassium and/or calcium, the sweetness intensity X3, the concentration P2 of the high-intensity sweetener, and the energy are, for example, as follows. These numerical values can be arbitrarily combined within a range of satisfying 0.1 < (X1 + X2) ≤ 20.

"The sweetness intensity X1": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, or 2.5 to 10.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The sweetness intensity X2": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, 4.0 to 11.5, 0.05 to 6.0, 0.05 to 6.5, 0.05 to 7.0, 0.05 to 7.5, 0.05 to 8.0, 0.05 to 8.5, 0.05 to 9.0, 0.05 to 9.5, 0.05 to 10.0, 0.05 to 10.5, 0.05 to 11.0, 0.05 to 11.5, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 3.0 to 10.0, 3.0 to 10.5, 3.0 to 11.0, 3.0 to 11.5, 3.5 to 4.0, 3.5 to 4.5, 3.5 to 5.0, 3.5 to 5.5, 3.5 to 6.0, 3.5 to 6.5, 4.0 to 4.5, 4.0 to 5.0, 4.0 to 5.5, 4.0 to 6.0, 4.0 to 6.5, 4.0 to 7.0, 4.0 to 10.0, 4.0 to 10.5, or 4.0 to 11.0. More preferably, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The amount of sodium": 5 to 90mg/100ml, 5 to 85mg/100ml, 5 to 80mg/100ml, 5 to 75mg/100ml, 5 to 70mg/100ml, 5 to 65mg/100ml, 5 to 60mg/100ml, 5 to 55mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10 to 90mg/100ml, 10 to 85mg/100ml, 10 to 80mg/100ml, 10 to 75mg/100ml, 10 to 70mg/100ml, 10 to 65mg/100ml, 10 to 60mg/100ml, 10 to 55mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, or 15 to 20mg/100ml.

"The amount of potassium": 15 to 100mg/100ml, 15 to 95mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 100mg/100ml, 20 to 95mg/100ml, 20 to 90mg/100ml, 20 to 85mg/100ml, 20 to 80mg/100ml, 20 to 75mg/100ml, 20 to 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 100mg/100ml, 25 to 95mg/100ml, 25 to 90mg/100ml, 25 to 85mg/100ml, 25 to 80mg/100ml, 25 to 75mg/100ml, 25 to 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, 25 to 30mg/100ml, 30 to 100mg/100ml, 30 to 95mg/100ml, 30 to 90mg/100ml, 30 to 85mg/100ml, 30 to 80mg/100ml, 30 to 75mg/100ml, 30 to 70mg/100ml, 30 to 65mg/100ml, 30 to 60mg/100ml, 30 to 55mg/100ml, 30 to 50mg/100ml, 30 to 45mg/100ml, 30 to 40mg/100ml, 30 to 35mg/100ml, 35 to 100mg/100ml, 35 to 95mg/100ml, 35 to 90mg/100ml, 35 to 85mg/100ml, 35 to 80mg/100ml, 35 to 75mg/100ml, 35 to 70mg/100ml, 35 to 65mg/100ml, 35 to 60mg/100ml, 35 to 55mg/100ml, 35 to 50mg/100ml, 35 to 45mg/100ml, 35 to 40mg/100ml, 40 to 100mg/100ml, 40 to 95mg/100ml, 40 to 90mg/100ml, 40 to 85mg/100ml, 40 to 80mg/100ml, 40 to 75mg/100ml, 40 to 70mg/100ml, 40 to 65mg/100ml, 40 to 60mg/100ml, 40 to 55mg/100ml, 40 to 50mg/100ml, or 40 to 45mg/100ml.

"The amount of calcium": 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 15mg/100ml, 0.5 to 10mg/100ml, 0.5 to 5mg/100ml, 0.5 to 4mg/100ml, 0.5 to 3mg/100ml, 0.5 to 2mg/100ml, 0.5 to 1mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 15mg/100ml, 5 to 10mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, or 10 to 15mg/100ml.

"The sweetness intensity X3": 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12. 5, 5.0 to 10, 5.5 to 20, 5.5 to 15, 5.5 to 12.5, 5.5 to 10, 6.0 to 20, 6.0 to 15, 6.0 to 12. 5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5.

"The amount of a high intensity sweetener P2 (ppm)": 20 to 550, 25 to 550, 30 to 550, 35 to 550, 40 to 550, 45 to 550, 50 to 550, 55 to 550, 20 to 540, 25 to 540, 30 to 540, 35 to 540, 40 to 540, 45 to 540, 50 to 540, 55 to 540, 20 to 530, 25 to 530, 30 to 530, 35 to 530, 40 to 530, 45 to 530, 50 to 530, 55 to 530, 20 to 520, 25 to 520, 30 to 520, 35 to 520, 40 to 520, 45 to 520, 50 to 520, 55 to 520, 20 to 510, 25 to 510, 30 to 510, 35 to 510, 40 to 510, 45 to 510, 50 to 510, 55 to 510, 20 to 505, 25 to 505, 30 to 505, 35 to 505, 40 to 505, 45 to 505, 50 to 505, 55 to 505, 20 to 500, 25 to 500, 30 to 500, 35 to 500, 40 to 500, 45 to 500, 50 to 500, 55 to 500, 20 to 495, 25 to 495, 30 to 495, 35 to 495, 40 to 495, 45 to 495, 50 to 495, 55 to 495, 20 to 490, 25 to 490, 30 to 490, 35 to 490, 40 to 490, 45 to 490, 50 to 490, or 55 to 490.

The energy: 0 to 25Kcal/100ml, 0 to 20Kcal/100ml, 0 to 15Kcal/100ml, 0 to 10Kcal/100ml, 0 to 5Kcal/100ml, 5 to 25Kcal/100ml, 5 to 20Kcal/100ml, 5 to 15Kcal/100ml, 5 to 10Kcal/100ml, 10 to 25Kcal/100ml, 10 to 20Kcal/100ml, 10 to 15Kcal/100ml, 15 to 25Kcal/100ml, 15 to 20Kcal/100ml, 20 to 25Kcal/100ml, 0 to 24Kcal/100ml, 0 to 8Kcal/100ml, 0 to 4Kcal/100ml, 4 to 24Kcal/100ml, 4 to 8Kcal/100ml, or 8 to 24Kcal/100ml.

In the coffee beverage A of the present invention, the forms of the natural sugar (including examples of the combination of glucose, sucrose, fructose, maltose, oligosaccharide, high-fructose corn syrup, or lactose), sodium, potassium, and calcium are defined as described in the section for the coffee beverage of the present invention.

In another specific aspect, the present invention provides the following coffee beverage (hereinafter, referred to as "the coffee beverage B of the present invention").

A coffee beverage comprising:
(a) natural sugar in an amount corresponding to a sweetness intensity X1;
(b) Luo han guo extract in an amount corresponding to a sweetness intensity X2;
(c) 5 mg/100 ml to 90 mg/100 ml of sodium; and
(d) 15 mg/100 ml to 100 mg/100 ml of potassium and/or 0.5 mg/100 ml to 50 mg/100 ml of calcium,
   wherein sweetness of a sweetness intensity X3 is exhibited by the components (a) to (d), and 0.1 < (X1 + X2) ≤ 20 is satisfied.

In the coffee beverage B of the present invention, preferable ranges of the sweetness intensity X1, the sweetness intensity X2, the sodium content, the content of potassium and/or calcium, the sweetness intensity X3, the content P2 of the Luo han guo extract, and the energy are, for example, as follows. These numerical values can be arbitrarily combined within a range of satisfying 0.1 < (X1 + X2) ≤ 20.

"The sweetness intensity X1": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The sweetness intensity X2": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.0 to 6.5, 2.0 to 7.0, 2.0 to 7.5, 2.5 to 7.0, 2.5 to 7.5, 2.5 to 6.0, 2.5 to 6.5, 2.5 to 7.0, 2.5 to 7.5, 3.0 to 7.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 9.0, 3.5 to 9.5, 3.5 to 10.0, 3.5 to 10.5, 3.5 to 11.0, 3.5 to 11.5, 4.0 to 11.5, 0.05 to 6.0, 0.05 to 6.5, 0.05 to 7.0, 0.05 to 7.5, 0.05 to 8.0, 0.05 to 8.5, 0.05 to 9.0, 0.05 to 9.5, 0.05 to 10.0, 0.05 to 10.5, 0.05 to 11.0, 0.05 to 11.5, 0.05 to 12.0, 0.05 to 13.0, 0.05 to 14.0, 0.05 to 15.0, 0.05 to 16.0, 0.05 to 17.0, 0.05 to 18.0, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0, or 4.0 to 18.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The amount of sodium": 5 to 90mg/100ml, 5 to 85mg/100ml, 5 to 80mg/100ml, 5 to 75mg/100ml, 5 to 70mg/100ml, 5 to 65mg/100ml, 5 to 60mg/100ml, 5 to 55mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10 to 90mg/100ml, 10 to 85mg/100ml, 10 to 80mg/100ml, 10 to 75mg/100ml, 10 to 70mg/100ml, 10 to 65mg/100ml, 10 to 60mg/100ml, 10 to 55mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 5 to 34mg/100ml, 5 to 33mg/100ml, 5 to 32mg/100ml, 5 to 31mg/100ml, 5 to 29mg/100ml, 5 to 22mg/100ml, 5 to 21mg/100ml, 10 to 34mg/100ml, 10 to 33mg/100ml, 10 to 32mg/100ml, 10 to 31mg/100ml, 10 to 29mg/100ml, 10 to 22mg/100ml, 10 to 21mg/100ml, 11.5 to 34mg/100ml, 11.5 to 33mg/100ml, 11.5 to 32mg/100ml, 11.5 to 31mg/100ml, 11.5 to 30mg/100ml, 11.5 to 29mg/100ml, 11.5 to 22mg/100ml, 11.5 to 21mg/100ml, 11.5 to 20mg/100ml, 11.5 to 19mg/100ml, 11.5 to 18mg/100ml, 11.5 to 17mg/100ml, 11.5 to 16mg/100ml, 11.5 to 15mg/100ml, 11.5 to 14mg/100ml, 11.5 to 13mg/100ml, 11.5 to 12mg/100ml, 5.75 to 28.75mg/100ml, 5.75 to 23mg/100ml, 5.75 to 17.25mg/100ml, 5.75 to 11.5mg/100ml, 11.5 to 28.75mg/100ml, 11.5 to 23mg/100ml, 11.5 to 17.25mg/100ml, 17.25 to 28.75mg/100ml, 17.25 to 23mg/100ml, or 23 to 28.75mg/100ml.

"The amount of potassium": 15 to 100mg/100ml, 15 to 95mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 100mg/100ml, 20 to 95mg/100ml, 20 to 90mg/100ml, 20 to 85mg/100ml, 20 to 80mg/100ml, 20 to 75mg/100ml, 20 to 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 100mg/100ml, 25 to 95mg/100ml, 25 to 90mg/100ml, 25 to 85mg/100ml, 25 to 80mg/100ml, 25 to 75mg/100ml, 25 to 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, 25 to 30mg/100ml, 30 to 100mg/100ml, 30 to 95mg/100ml, 30 to 90mg/100ml, 30 to 85mg/100ml, 30 to 80mg/100ml, 30 to 75mg/100ml, 30 to 70mg/100ml, 30 to 65mg/100ml, 30 to 60mg/100ml, 30 to 55mg/100ml, 30 to 50mg/100ml, 30 to 45mg/100ml, 30 to 40mg/100ml, 30 to 35mg/100ml, 35 to 100mg/100ml, 35 to 95mg/100ml, 35 to 90mg/100ml, 35 to 85mg/100ml, 35 to 80mg/100ml, 35 to 75mg/100ml, 35 to 70mg/100ml, 35 to 65mg/100ml, 35 to 60mg/100ml, 35 to 55mg/100ml, 35 to 50mg/100ml, 35 to 45mg/100ml, 35 to 40mg/100ml, 40 to 100mg/100ml, 40 to 95mg/100ml, 40 to 90mg/100ml, 40 to 85mg/100ml, 40 to 80mg/100ml, 40 to 75mg/100ml, 40 to 70mg/100ml, 40 to 65mg/100ml, 40 to 60mg/100ml, 40 to 55mg/100ml, 40 to 50mg/100ml, or 40 to 45mg/100ml.

"The amount of calcium": 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 15mg/100ml, 0.5 to 10mg/100ml, 0.5 to 5mg/100ml, 0.5 to 4mg/100ml, 0.5 to 3mg/100ml, 0.5 to 2mg/100ml, 0.5 to 1mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 15mg/100ml, 5 to 10mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, or 10 to 15mg/100ml.

"The sweetness intensity X3": 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12. 5, 5.0 to 10, 5.5 to 20, 5.5 to 15, 5.5 to 12.5, 5.5 to 10, 6.0 to 20, 6.0 to 15, 6.0 to 12. 5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5, 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

"The amount of Luo han guo extract P2 (ppm)": 20 to 550, 25 to 550, 30 to 550, 35 to 550, 40 to 550, 45 to 550, 50 to 550, 55 to 550, 20 to 540, 25 to 540, 30 to 540, 35 to 540, 40 to 540, 45 to 540, 50 to 540, 55 to 540, 20 to 530, 25 to 530, 30 to 530, 35 to 530, 40 to 530, 45 to 530, 50 to 530, 55 to 530, 20 to 520, 25 to 520, 30 to 520, 35 to 520, 40 to 520, 45 to 520, 50 to 520, 55 to 520, 20 to 510, 25 to 510, 30 to 510, 35 to 510, 40 to 510, 45 to 510, 50 to 510, 55 to 510, 20 to 505, 25 to 505, 30 to 505, 35 to 505, 40 to 505, 45 to 505, 50 to 505, 55 to 505, 20 to 500, 25 to 500, 30 to 500, 35 to 500, 40 to 500, 45 to 500, 50 to 500, 55 to 500, 20 to 495, 25 to 495, 30 to 495, 35 to 495, 40 to 495, 45 to 495, 50 to 495, 55 to 495, 20 to 490, 25 to 490, 30 to 490, 35 to 490, 40 to 490, 45 to 490, 50 to 490, 55 to 490, 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The energy: 0 to 50Kcal/100ml, 0 to 45Kcal/100ml, 0 to 40Kcal/100ml, 0 to 35Kcal/100ml, 0 to 30Kcal/100ml, 0 to 25Kcal/100ml, 0 to 20Kcal/100ml, 0 to 15Kcal/100ml, 0 to 10Kcal/100ml, 0 to 5Kcal/100ml, 5 to 50Kcal/100ml, 5 to 45Kcal/100ml, 5 to 40Kcal/100ml, 5 to 35Kcal/100ml, 5 to 30Kcal/100ml, 5 to 25Kcal/100ml, 5 to 20Kcal/100ml, 5 to 15Kcal/100ml, 5 to 10Kcal/100ml, 10 to 50Kcal/100ml, 10 to 45Kcal/100ml, 10 to 40Kcal/100ml, 10 to 35Kcal/100ml, 10 to 30Kcal/100ml, 10 to 25Kcal/100ml, 10 to 20Kcal/100ml, 10 to 15Kcal/100ml, 15 to 50Kcal/100ml, 15 to 45Kcal/100ml, 15 to 40Kcal/100ml, 15 to 35Kcal/100ml, 15 to 30Kcal/100ml, 15 to 25Kcal/100ml, 15 to 20Kcal/100ml, 20 to 50Kcal/100ml, 20 to 45Kcal/100ml, 20 to 40Kcal/100ml, 20 to 35Kcal/100ml, 20 to 30Kcal/100ml, 20 to 25Kcal/100ml, 25 to 50Kcal/100ml, 25 to 45Kcal/100ml, 25 to 40Kcal/100ml, 25 to 35Kcal/100ml, 25 to 30Kcal/100ml, 0 to 32Kcal/100ml, 0 to 24Kcal/100ml, 0 to 8Kcal/100ml, 0 to 4Kcal/100ml, 4 to 32Kcal/100ml, 4 to 24Kcal/100ml, 4 to 8Kcal/100ml, 8 to 32Kcal/100ml, 8 to 24Kcal/100ml, or 24 to 32Kcal/100ml.

In addition, in the coffee beverage B of the present invention, the forms of the natural sugar (including examples of the combination of glucose, sucrose, fructose, maltose, oligosaccharide, high-fructose corn syrup, or lactose), sodium, potassium, and calcium are defined as described in the section for the coffee beverage of the present invention.

In another specific aspect, the present invention provides the following coffee beverage (hereinafter, referred to as "the coffee beverage C of the present invention").

A coffee beverage comprising:
(a) natural sugar in an amount corresponding to a sweetness intensity X1;
(b) mogroside V in an amount corresponding to a sweetness intensity X2;
(c) 5 mg/100 ml to 90 mg/100 ml of sodium; and
(d) 15 mg/100 ml to 100 mg/100 ml of potassium and/or 0.5 mg/100 ml to 50 mg/100 ml of calcium,
   wherein sweetness of a sweetness intensity X3 is exhibited by the components (a) to (d), and 0.1 < (X1 + X2) ≤ 20 is satisfied.

In the coffee beverage C of the present invention, preferable ranges of the sweetness intensity X1, the sweetness intensity X2, the sodium content, the content of potassium and/or calcium, the sweetness intensity X3, the content P2 (ppm) of mogroside V, and the energy are, for example, as follows. These numerical values can be arbitrarily combined within a range of satisfying 0.1 < (X1 + X2) ≤ 20.

"The sweetness intensity X1": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The sweetness intensity X2": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.0 to 6.5, 2.0 to 7.0, 2.0 to 7.5, 2.5 to 7.0, 2.5 to 7.5, 2.5 to 6.0, 2.5 to 6.5, 2.5 to 7.0, 2.5 to 7.5, 3.0 to 7.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 9.0, 3.5 to 9.5, 3.5 to 10.0, 3.5 to 10.5, 3.5 to 11.0, 3.5 to 11.5, 4.0 to 11.5, 0.05 to 6.0, 0.05 to 6.5, 0.05 to 7.0, 0.05 to 7.5, 0.05 to 8.0, 0.05 to 8.5, 0.05 to 9.0, 0.05 to 9.5, 0.05 to 10.0, 0.05 to 10.5, 0.05 to 11.0, 0.05 to 11.5, 0.05 to 12.0, 0.05 to 13.0, 0.05 to 14.0, 0.05 to 15.0, 0.05 to 16.0, 0.05 to 17.0, 0.05 to 18.0, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0, or 4.0 to 18.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The amount of sodium": 5 to 90mg/100ml, 5 to 85mg/100ml, 5 to 80mg/100ml, 5 to 75mg/100ml, 5 to 70mg/100ml, 5 to 65mg/100ml, 5 to 60mg/100ml, 5 to 55mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10 to 90mg/100ml, 10 to 85mg/100ml, 10 to 80mg/100ml, 10 to 75mg/100ml, 10 to 70mg/100ml, 10 to 65mg/100ml, 10 to 60mg/100ml, 10 to 55mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 20mg/100ml, 5 to 22mg/100ml, 5 to 21mg/100ml, 10 to 22mg/100ml, 10 to 21mg/100ml, 11.5 to 22mg/100ml, 11.5 to 21mg/100ml, 11.5 to 20mg/100ml, 11.5 to 19mg/100ml, 11.5 to 18mg/100m1, 11.5 to 17mg/100ml, 11.5 to 16mg/100ml, 11.5 to 15mg/100ml, 11.5 to 14mg/100ml, 11.5 to 13mg/100ml, 11.5 to 12mg/100ml, 5.75 to 17.25mg/100ml, 5.75 to 11.5mg/100ml, or 11.5 to 17.25mg/100ml.

"The amount of potassium": 15 to 100mg/100ml, 15 to 95mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 100mg/100ml, 20 to 95mg/100ml, 20 to 90mg/100ml, 20 to 85mg/100ml, 20 to 80mg/100ml, 20 to 75mg/100ml, 20 to 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 100mg/100ml, 25 to 95mg/100ml, 25 to 90mg/100ml, 25 to 85mg/100ml, 25 to 80mg/100ml, 25 to 75mg/100ml, 25 to 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, 25 to 30mg/100ml, 30 to 100mg/100ml, 30 to 95mg/100ml, 30 to 90mg/100ml, 30 to 85mg/100ml, 30 to 80mg/100ml, 30 to 75mg/100ml, 30 to 70mg/100ml, 30 to 65mg/100ml, 30 to 60mg/100ml, 30 to 55mg/100ml, 30 to 50mg/100ml, 30 to 45mg/100ml, 30 to 40mg/100ml, 30 to 35mg/100ml, 35 to 100mg/100ml, 35 to 95mg/100ml, 35 to 90mg/100ml, 35 to 85mg/100ml, 35 to 80mg/100ml, 35 to 75mg/100ml, 35 to 70mg/100ml, 35 to 65mg/100ml, 35 to 60mg/100ml, 35 to 55mg/100ml, 35 to 50mg/100ml, 35 to 45mg/100ml, 35 to 40mg/100ml, 40 to 100mg/100ml, 40 to 95mg/100ml, 40 to 90mg/100ml, 40 to 85mg/100ml, 40 to 80mg/100ml, 40 to 75mg/100ml, 40 to 70mg/100ml, 40 to 65mg/100ml, 40 to 60mg/100ml, 40 to 55mg/100ml, 40 to 50mg/100ml, or 40 to 45mg/100ml.

"The amount of calcium": 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 15mg/100ml, 0.5 to 10mg/100ml, 0.5 to 5mg/100ml, 0.5 to 4mg/100ml, 0.5 to 3mg/100ml, 0.5 to 2mg/100ml, 0.5 to 1mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 15mg/100ml, 5 to 10mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, or 10 to 15mg/100ml.

"The sweetness intensity X3": 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12. 5, 5.0 to 10, 5.5 to 20, 5.5 to 15, 5.5 to 12.5, 5.5 to 10, 6.0 to 20, 6.0 to 15, 6.0 to 12. 5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5, 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

"The amount of mogroside V P2 (ppm)": 20 to 550, 25 to 550, 30 to 550, 35 to 550, 40 to 550, 45 to 550, 50 to 550, 55 to 550, 20 to 540, 25 to 540, 30 to 540, 35 to 540, 40 to 540, 45 to 540, 50 to 540, 55 to 540, 20 to 530, 25 to 530, 30 to 530, 35 to 530, 40 to 530, 45 to 530, 50 to 530, 55 to 530, 20 to 520, 25 to 520, 30 to 520, 35 to 520, 40 to 520, 45 to 520, 50 to 520, 55 to 520, 20 to 510, 25 to 510, 30 to 510, 35 to 510, 40 to 510, 45 to 510, 50 to 510, 55 to 510, 20 to 505, 25 to 505, 30 to 505, 35 to 505, 40 to 505, 45 to 505, 50 to 505, 55 to 505, 20 to 500, 25 to 500, 30 to 500, 35 to 500, 40 to 500, 45 to 500, 50 to 500, 55 to 500, 20 to 495, 25 to 495, 30 to 495, 35 to 495, 40 to 495, 45 to 495, 50 to 495, 55 to 495, 20 to 490, 25 to 490, 30 to 490, 35 to 490, 40 to 490, 45 to 490, 50 to 490, 55 to 490, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The energy: 0 to 50Kcal/100ml, 0 to 45Kcal/100ml, 0 to 40Kcal/100ml, 0 to 35Kcal/100ml, 0 to 30Kcal/100ml, 0 to 25Kcal/100ml, 0 to 20Kcal/100ml, 0 to 15Kcal/100ml, 0 to 10Kcal/100ml, 0 to 5Kcal/100ml, 5 to 50Kcal/100ml, 5 to 45Kcal/100ml, 5 to 40Kcal/100ml, 5 to 35Kcal/100ml, 5 to 30Kcal/100ml, 5 to 25Kcal/100ml, 5 to 20Kcal/100ml, 5 to 15Kcal/100ml, 5 to 10Kcal/100ml, 10 to 50Kcal/100ml, 10 to 45Kcal/100ml, 10 to 40Kcal/100ml, 10 to 35Kcal/100ml, 10 to 30Kcal/100ml, 10 to 25Kcal/100ml, 10 to 20Kcal/100ml, 10 to 15Kcal/100ml, 15 to 50Kcal/100ml, 15 to 45Kcal/100ml, 15 to 40Kcal/100ml, 15 to 35Kcal/100ml, 15 to 30Kcal/100ml, 15 to 25Kcal/100ml, 15 to 20Kcal/100ml, 20 to 50Kcal/100ml, 20 to 45Kcal/100ml, 20 to 40Kcal/100ml, 20 to 35Kcal/100ml, 20 to 30Kcal/100ml, 20 to 25Kcal/100ml, 25 to 50Kcal/100ml, 25 to 45Kcal/100ml, 25 to 40Kcal/100ml, 25 to 35Kcal/100ml, 25 to 30Kcal/100ml, 0 to 32Kcal/100ml, 0 to 24Kcal/100ml, 0 to 8Kcal/100ml, 0 to 4Kcal/100ml, 4 to 32Kcal/100ml, 4 to 24Kcal/100ml, 4 to 8Kcal/100ml, 8 to 32Kcal/100ml, 8 to 24Kcal/100ml, or 24 to 32Kcal/100ml.

In addition, in the coffee beverage C of the present invention, the forms of the natural sugar (including examples of the combination of glucose, sucrose, fructose, maltose, oligosaccharide, high-fructose corn syrup, or lactose), sodium, potassium, and calcium are defined as described in the section for the coffee beverage of the present invention.

Further, another aspect of the present invention provides a coffee beverage comprising:
(a) natural sugar in an amount of 0.1 to 0.5 w/v%, 0.1 to 1.0 w/v%, 0.1 to 1.5 w/v%, 0.1 to 2.0 w/v%, 0.1 to 2.5 w/v%, 0.1 to 3.0 w/v%, 0.1 to 3.5 w/v%, 0.1 to 4.0 w/v%, 0.1 to 4.5 w/v%, 0.1 to 5.0 w/v%, 0.1 to 5.5 w/v%, 0.1 to 5.9 w/v%, 0.5 to 1.0 w/v%, 0.5 to 1.5 w/v%, 0.5 to 2.0 w/v%, 0.5 to 2.5 w/v%, 0.5 to 3.0 w/v%, 0.5 to 3.5 w/v%, 0.5 to 4.0 w/v%, 0.5 to 4.5 w/v%, 0.5 to 5.0 w/v%, 0.5 to 5.5 w/v%, 0.5 to 5.9 w/v%, 1.0 to 1.5 w/v%, 1.0 to 2.0 w/v%, 1.0 to 2.5 w/v%, 1.0 to 3.0 w/v%, 1.0 to 3.5 w/v%, 1.0 to 4.0 w/v%, 1.0 to 4.5 w/v%, 1.0 to 5.0 w/v%, 1.0 to 5.5 w/v%, 1.0 to 5.9 w/v%, 1.5 to 2.0 w/v%, 1.5 to 2.5 w/v%, 1.5 to 3.0 w/v%, 1.5 to 3.5 w/v%, 1.5 to 4.0 w/v%, 1.5 to 4.5 w/v%, 1.5 to 5.0 w/v%, 1.5 to 5.5 w/v%, 1.5 to 5.9 w/v%, 2.0 to 2.5 w/v%, 2.0 to 3.0 w/v%, 2.0 to 3.5 w/v%, 2.0 to 4.0 w/v%, 2.0 to 4.5 w/v%, 2.0 to 5.0 w/v%, 2.0 to 5.5 w/v%, or 2.0 to 5.9 w/v%;
(b) at least one high-intensity sweetener selected from the group consisting of rebaudioside M, rebaudioside D, Luo han guo extract, mogroside V, and combinations thereof in an amount of 20 to 550ppm, 25 to 550 ppm, 30 to 550 ppm, 35 to 550 ppm, 40 to 550 ppm, 45 to 550 ppm, 50 to 550 ppm, 55 to 550 ppm, 20 to 540 ppm, 25 to 540 ppm, 30 to 540 ppm, 35 to 540 ppm, 40 to 540 ppm, 45 to 540 ppm, 50 to 540 ppm, 55 to 540 ppm, 20 to 530 ppm, 25 to 530 ppm, 30 to 530 ppm, 35 to 530 ppm, 40 to 530 ppm, 45 to 530 ppm, 50 to 530 ppm, 55 to 530 ppm, 20 to 520 ppm, 25 to 520 ppm, 30 to 520 ppm, 35 to 520 ppm, 40 to 520 ppm, 45 to 520 ppm, 50 to 520 ppm, 55 to 520 ppm, 20 to 510 ppm, 25 to 510 ppm, 30 to 510 ppm, 35 to 510 ppm, 40 to 510 ppm, 45 to 510 ppm, 50 to 510 ppm, 55 to 510ppm, 20 to 505ppm, 25 to 505ppm, 30 to 505ppm, 35 to 505ppm, 40 to 505ppm, 45 to 505ppm, 50 to 505ppm, 55 to 505ppm, 20 to 500ppm, 25 to 500ppm, 30 to 500ppm, 35 to 500ppm, 40 to 500ppm, 45 to 500ppm, 50 to 500ppm, 55 to 500ppm, 20 to 495ppm, 25 to 495ppm, 30 to 495ppm, 35 to 495ppm, 40 to 495ppm, 45 to 495ppm, 50 to 495ppm, 55 to 495ppm, 20 to 490ppm, 25 to 490ppm, 30 to 490ppm, 35 to 490ppm, 40 to 490ppm, 45 to 490ppm, 50 to 490ppm, or 55 to 490ppm;
(c) 5 to 90mg/100ml, 5 to 85mg/100ml, 5 to 80mg/100ml, 5 to 75mg/100ml, 5 to 70mg/100ml, 5 to 65mg/100ml, 5 to 60mg/100ml, 5 to 55mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10 to 90mg/100ml, 10 to 85mg/100ml, 10 to 80mg/100ml, 10 to 75mg/100ml, 10 to 70mg/100ml, 10 to 65mg/100ml, 10 to 60mg/100ml, 10 to 55mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 90mg/100ml, 20 to 85mg/100ml, 20 to 80mg/100ml, 20 to 75mg/100ml, 20 to 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 90mg/100ml, 25 to 85mg/100ml, 25 to 80mg/100ml, 25 to 75mg/100ml, 25 to 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, 25 to 30mg/100ml, 30 to 90mg/100ml, 30 to 85mg/100ml, 30 to 80mg/100ml, 30 to 75mg/100ml, 30 to 70mg/100ml, 30 to 65mg/100ml, 30 to 60mg/100ml, 30 to 55mg/100ml, 30 to 50mg/100ml, 30 to 45mg/100ml, 30 to 40mg/100ml, 30 to 35mg/100ml, 35 to 90mg/100ml, 35 to 85mg/100ml, 35 to 80mg/100ml, 35 to 75mg/100ml, 35 to 70mg/100ml, 35 to 65mg/100ml, 35 to 60mg/100ml, 35 to 55mg/100ml, 35 to 50mg/100ml, 35 to 45mg/100ml, 35 to 40mg/100ml, 40 to 90mg/100ml, 40 to 85mg/100ml, 40 to 80mg/100ml, 40 to 75mg/100ml, 40 to 70mg/100ml, 40 to 65mg/100ml, 40 to 60mg/100ml, 40 to 55mg/100ml, 40 to 50mg/100ml, or 40 to 45mg/100ml of sodium; and
(d) 15 to 100mg/100ml, 15 to 95mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 100mg/100ml, 20 to 95mg/100ml, 20 to 90mg/100ml, 20 to 85mg/100ml, 20 to 80mg/100ml, 20 to 75mg/100ml, 20 to 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 100mg/100ml, 25 to 95mg/100ml, 25 to 90mg/100ml, 25 to 85mg/100ml, 25 to 80mg/100ml, 25 to 75mg/100ml, 25 to 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, 25 to 30mg/100ml, 30 to 100mg/100ml, 30 to 95mg/100ml, 30 to 90mg/100ml, 30 to 85mg/100ml, 30 to 80mg/100ml, 30 to 75mg/100ml, 30 to 70mg/100ml, 30 to 65mg/100ml, 30 to 60mg/100ml, 30 to 55mg/100ml, 30 to 50mg/100ml, 30 to 45mg/100ml, 30 to 40mg/100ml, 30 to 35mg/100ml, 35 to 100mg/100ml, 35 to 95mg/100ml, 35 to 90mg/100ml, 35 to 85mg/100ml, 35 to 80mg/100ml, 35 to 75mg/100ml, 35 to 70mg/100ml, 35 to 65mg/100ml, 35 to 60mg/100ml, 35 to 55mg/100ml, 35 to 50mg/100ml, 35 to 45mg/100ml, 35 to 40mg/100ml, 40 to 80mg/100ml, 40 to 75mg/100ml, 40 to 70mg/100ml, 40 to 65mg/100ml, 40 to 60mg/100ml, 40 to 55mg/100ml, 40 to 50mg/100ml or 40 to 45mg/100ml of potassium, and/or 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 15mg/100ml, 0.5 to 10mg/100ml, 0.5 to 5mg/100ml, 0.5 to 4mg/100ml, 0.5 to 3mg/100ml, 0.5 to 2mg/100ml, 0.5 to 1mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 15mg/100ml, 5 to 10mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml or 10 to 15mg/100ml of calcium.

The present invention provides, as a second aspect, the following coffee beverage (hereinafter, referred to as "coffee beverage of the second aspect of the present invention").

A coffee beverage comprising:
(a) natural sugar in an amount corresponding to a sweetness intensity X1;
(b) high-intensity sweetener in an amount corresponding to a sweetness intensity X2;
(c) 5 mg/100 ml to 90 mg/100 ml of sodium; and
(d) 15 mg/100 ml to 150 mg/100 ml of potassium and/or 0.5 mg/100 ml to 50 mg/100 ml of calcium,
   wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
   0.1 < (X1 + X2) ≤ 20 is satisfied.

The coffee beverage of the present invention has a sweetness of a sweetness intensity X3 exhibited by the above-mentioned components (a) to (d).

In the coffee beverage of the second aspect of the present invention, the forms of the coffee beverage, the natural sugar (including examples of the combination of glucose, sucrose, fructose, maltose, oligosaccharide, high-fructose corn syrup, or lactose), high-intensity sweetener, sodium, and calcium are defined as described in the section for the coffee beverage of the present invention.

The coffee beverage according to the second aspect of the present invention may contain (d) 15 mg/100 ml to 100 mg/100 ml of potassium, which means that the amount of potassium atoms is 15 mg/100 ml to 100 mg/100 ml of potassium. The amount of potassium may be the amount of 15 to 150mg/100ml, 15 to 145mg/100ml, 15 to 140mg/100ml, 15 to 135mg/100ml, 15 to 130mg/100ml, 15 to 125mg/100ml, 15 to 120mg/100ml, 15 to 115mg/100ml, 15 to 110mg/100ml, 15 to 105mg/100ml, 15 to 100mg/100ml, 15 to 95mg/100ml, 15 to 90mg/100ml, 15 to 85mg/100ml, 15 to 80mg/100ml, 15 to 75mg/100ml, 15 to 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 150mg/100ml, 20 to 145mg/100ml, 20 to 140mg/100ml, 20 to 135mg/100ml, 20 to 130mg/100ml, 20 to 125mg/100ml, 20 to 120mg/100ml, 20 to 115mg/100ml, 20 to 110mg/100ml, 20 to 105mg/100ml, 20 to 100mg/100ml, 20 to 95mg/100ml, 20 to 90mg/100ml, 20 to 85mg/100ml, 20 to 80mg/100ml, 20 to 75mg/100ml, 20 to 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 150mg/100ml, 25 to 145mg/100ml, 25 to 140mg/100ml, 25 to 135mg/100ml, 25 to 130mg/100ml, 25 to 125mg/100ml, 25 to 120mg/100ml, 25 to 115mg/100ml, 25 to 110mg/100ml, 25 to 105mg/100ml, 25 to 100mg/100ml, 25 to 95mg/100ml, 25 to 90mg/100ml, 25 to 85mg/100ml, 25 to 80mg/100ml, 25 to 75mg/100ml, 25 to 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, 25 to 30mg/100ml, 30 to 150mg/100ml, 30 to 145mg/100ml, 30 to 140mg/100ml, 30 to 135mg/100ml, 30 to 130mg/100ml, 30 to 125mg/100ml, 30 to 120mg/100ml, 30 to 115mg/100ml, 30 to 110mg/100ml, 30 to 105mg/100ml, 30 to 100mg/100ml, 30 to 95mg/100ml, 30 to 90mg/100ml, 30 to 85mg/100ml, 30 to 80mg/100ml, 30 to 75mg/100ml, 30 to 70mg/100ml, 30 to 65mg/100ml, 30 to 60mg/100ml, 30 to 55mg/100ml, 30 to 50mg/100ml, 30 to 45mg/100ml, 30 to 40mg/100ml, 30 to 35mg/100ml, 35 to 150mg/100ml, 35 to 145mg/100ml, 35 to 140mg/100ml, 35 to 135mg/100ml, 35 to 130mg/100ml, 35 to 125mg/100ml, 35 to 120mg/100ml, 35 to 115mg/100ml, 35 to 110mg/100ml, 35 to 105mg/100ml, 35 to 100mg/100ml, 35 to 95mg/100ml, 35 to 90mg/100ml, 35 to 85mg/100ml, 35 to 80mg/100ml, 35 to 75mg/100ml, 35 to 70mg/100ml, 35 to 65mg/100ml, 35 to 60mg/100ml, 35 to 55mg/100ml, 35 to 50mg/100ml, 35 to 45mg/100ml, 35 to 40mg/100ml, 40 to 150mg/100ml, 40 to 145mg/100ml, 40 to 140mg/100ml, 40 to 135mg/100ml, 40 to 130mg/100ml, 40 to 125mg/100ml, 40 to 120mg/100ml, 40 to 115mg/100ml, 40 to 110mg/100ml, 40 to 105mg/100ml, 40 to 100mg/100ml, 40 to 95mg/100ml, 40 to 90mg/100ml, 40 to 85mg/100ml, 40 to 80mg/100ml, 40 to 75mg/100ml, 40 to 70mg/100ml, 40 to 65mg/100ml, 40 to 60mg/100ml, 40 to 55mg/100ml, 40 to 50mg/100ml, or 40 to 45mg/100ml, depending on embodiments.

In addition, the amount of potassium that is added to a coffee beverage may be 0.1 to 50mg/100ml, 0.1 to 45mg/100ml, 0.1 to 40mg/100ml, 0.1 to 35mg/100ml, 0.1 to 30mg/100ml, 0.1 to 25mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 1 to 50mg/100ml, 1 to 45mg/100ml, 1 to 40mg/100ml, 1 to 35mg/100ml, 1 to 30mg/100ml, 1 to 25mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100m1, 1 to 12mg/100ml, 1 to 11mg/100ml, 1 to 10mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100m1, 5 to 17mg/100m1, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 50mg/100ml, 25 to 45mg/100ml, 25 to 40mg/100ml, 25 to 35mg/100ml, or 25 to 30mg/100ml.

The form of potassium is not particularly limited as long as it is contained in the coffee beverage of the second aspect of the present invention in an ingestible state. For example, the form may be at least one form selected from the group consisting of potassium alginate, potassium chloride, potassium citrate, potassium gluconate, L-potassium glutamate, potassium bromate, DL-potassium hydrogen tartrate, L-potassium hydrogen tartrate, potassium nitrate, potassium hydroxide, potassium sorbate, potassium carbonate, potassium lactate, potassium norbixin, potassium pyrosulfate, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof. In addition, potassium is also contained in coffee beans in some cases, and in such a case, potassium obtained when extracting coffee from coffee beans is also encompassed in the potassium contained in the coffee beverage of the present invention. In addition, when a coffee beverage contains a milk component, such as milk, cow's milk, or a dairy product, potassium contained in the milk component is also encompassed.

In the present specification, the content of potassium in a beverage can be measured by atomic absorption spectrometry. Incidentally, when the amount of a potassium-containing compound contained in the beverage is known, the value calculated from the amount may be used.

### 2. Method for producing coffee beverage

Even in a coffee beverage with a reduced energy (Kcal/100 ml) level by setting the amounts of the natural sugar and the high-intensity sweetener to low, it is possible to enhance the sweetness based on the natural sugar and the high-intensity sweetener by adding potassium and/or calcium in low concentrations in addition to sodium in a concentration so low as to not be detectable by the human.

Accordingly, the present invention provides, as a further another aspect, the following method for producing a coffee beverage with enhanced sweetness (hereinafter, referred to as "the method of the present invention").

A method for producing a coffee beverage, comprising to a raw material:
(i) adding (a) natural sugar in an amount corresponding to a sweetness intensity X1 and (b) high-intensity sweetener in an amount corresponding to a sweetness intensity X2;
(ii) adding (c) sodium such that a sodium concentration in the beverage is 5 mg/100 ml to 90 mg/100 ml; and
(iii) adding (d) potassium such that a potassium content in the beverage is 15 mg/100 ml to 100 mg/100 ml and/or calcium such that a calcium content in the beverage is 0.5 mg/100 ml to 50 mg/100 ml,
   wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
   sweetness of a sweetness intensity X3 is exhibited by the components (a) to (d), and 0.1 < (X1 + X2) ≤ 20 is satisfied.

The coffee beverage produced by the method of the present invention is the coffee beverage of the present invention described in the above section "1. Coffee beverage having improved taste quality exhibited by natural sugar and high-intensity sweetener". In addition, the "raw material" in the method of the present invention may be each material or mixtures thereof necessary for production of a coffee beverage and may further include an additional component such as a preservative, a flavoring agent, a carrier, or a milk component. In addition, the "raw material" may be composed of a plurality of materials. However, regardless of the type of the raw material, the finally produced coffee beverage of the present invention does not include a substance that exhibits sweetness other than the components (a) and (b) as a sweetener.

In the method of the present invention, any of the following steps (i) to (iii) may be performed first:
(i) a step of adding (a) natural sugar in an amount corresponding to a sweetness intensity X1 and (b) high-intensity sweetener in an amount corresponding to a sweetness intensity X2;
(ii) a step of adding (c) sodium such that a sodium concentration in the beverage is 5 mg/100 ml to 90 mg/100 ml; and
(iii) a step of adding (d) potassium such that a potassium content in the beverage is 15 mg/100 ml to 100 mg/100 ml and/or calcium such that a calcium content in the beverage is 0.5 mg/100 ml to 50 mg/100 ml.

In step (i), (a) natural sugar in an amount corresponding to a sweetness intensity X1 and (b) high-intensity sweetener in an amount corresponding to a sweetness intensity X2 are added to a raw material, where (a) natural sugar in an amount corresponding to a sweetness intensity X1 and (b) high-intensity sweetener in an amount corresponding to a sweetness intensity X2 may be separately added.

Furthermore, when (a) natural sugar in an amount corresponding to a sweetness intensity X1 is added, the natural sugar in an amount corresponding to the sweetness intensity X1 need not be added at once and may be added in several batches. Similarly, when (b) high-intensity sweetener in an amount corresponding to a sweetness intensity X2 is added, the natural sugar in an amount corresponding to the sweetness intensity X2 need not be added at once and may be added in several batches.

In addition, as another aspect, it is also possible to adjust the amounts of natural sugar and high-intensity sweetener contained in the finally produced coffee beverage to the amounts corresponding to a sweetness intensity X1 and a sweetness intensity X2, respectively, by adding a mixture of the natural sugar and the high-intensity sweetener in several batches.

In step (ii), when (c) sodium is added such that a sodium concentration in the beverage is 5 mg/100 ml to 90 mg/100 ml, sodium need not be added at once and may be added in several batches.

Sodium that is added to a raw material in step (ii) may be, for example, at least one form selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptanoate, sodium gluconate, sodium glutamate, sodium tartrate, sodium aspartate, sodium lactate, sodium caseinate, sodium ascorbate, and mixtures thereof. In addition, sodium is also contained in an extract of coffee beans in some cases, and in such a case, the amount of sodium is adjusted such that the total content of this sodium derived from coffee and the additional sodium is 5 mg/100 ml to 90 mg/100 ml.

Potassium that can be added to a raw material in step (iii) may be, for example, at least one form selected from the group consisting of potassium alginate, potassium chloride, potassium citrate, potassium gluconate, L-potassium glutamate, potassium bromate, DL-potassium hydrogen tartrate, L-potassium hydrogen tartrate, potassium nitrate, potassium hydroxide, potassium sorbate, potassium carbonate, potassium lactate, potassium norbixin, potassium pyrosulfate, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof. In addition, potassium is also contained in an extract of coffee beans in some cases, and in such a case, the amount of potassium is adjusted such that the total content of this potassium derived from coffee and the additional potassium is 15 mg/100 ml to 100 mg/100 ml. In addition, when a coffee beverage contains a milk component, such as milk, cow's milk, or a dairy product, the potassium content contained in the milk component is also considered.

Calcium that can be added to a raw material in step (iii) may be, for example, at least one form selected from the group consisting of L-calcium ascorbate, calcium alginate, calcium disodium ethylenediaminetetraacetate, calcium chloride, calcium carboxymethyl cellulose, calcium citrate, calcium glycerophosphate, calcium gluconate, L-calcium glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof. In addition, calcium is also contained in an extract of coffee beans and water (in particular, hard water) in some cases, and in such a case, the amount of calcium is adjusted such that the total content of this calcium derived from coffee and the additional calcium is 0.5 mg/100 ml to 50 mg/100 ml. In addition, when a coffee beverage contains a milk component, such as milk, cow's milk, or a dairy product, the calcium amount contained in the milk component is also considered.

The "addition" herein means not only the actual operation of adding either of the components (a) to (d) to a raw material but also the operation of adjusting the amounts of the components (a) to (d) in the finally produced coffee beverage to an amount corresponding to a sweetness intensity X1, an amount corresponding to a sweetness intensity X2, 5 to 90 mg/100 ml of sodium, and (d) 15 mg/100 ml to 100 mg/100 ml of potassium and/or 0.5 mg/100 ml to 50 mg/100 ml of calcium, respectively, through the production process of a coffee beverage of the present invention.

For example, in a case in which a first raw material contains a milk component, a grain, a bean, or an extract thereof and thereby contains one or more of the components (a) to (d) in advance, a second raw material to be mixed with the first raw material also contains the components (a) to (d), and a coffee beverage of the present invention can be produced by mixing the first and second raw materials, the operation of independently adding the components (a) to (d) to the raw materials is not carried out. However, in the method of the present invention, the steps (i) to (iii) are considered to have been carried out as long as the finally produced coffee beverage of the present invention contains (a) natural sugar in an amount corresponding to a sweetness intensity X1, (b) high-intensity sweetener in an amount corresponding to a sweetness intensity X2, (c) 5 mg/100 ml to 90 mg/100 ml of sodium, and (d) 15 mg/100 ml to 100 mg/100 ml of potassium and/or 0.5 mg/100 ml to 50 mg/100 ml of calcium.

When the coffee beverage of the present invention is a packaged beverage, the method for producing a beverage of the present invention includes a step of filling a container with the coffee beverage. In addition, when provided as a packaged beverage, it is preferably possible that the coffee beverage for a long time by sterilizing the coffee beverage before or after filling a container with the coffee beverage. For example, when provided as a canned coffee beverage, a can is filled with a predetermined amount of the coffee beverage, and for example, heat sterilization can be performed by carrying out retort sterilization at 120°C to 125°C for about 5 to 20 minutes. Alternately, when provided as a beverage packed in a PET bottle, paper pack, or bottle, a packaged beverage can be obtained by, for example, performing UHT sterilization by keeping 130°C to 145°C for about 2 to 120 seconds and performing hot pack filling or low-temperature aseptic filling of a predetermined amount of the beverage.

In the method of the present invention, the "coffee beverage", the "natural sugar", the "sweetness intensity X1", the "high-intensity sweetener", the "sweetness intensity X2", the sodium content, the content of potassium and/or calcium, the form of sodium, potassium, and/or calcium in the coffee beverage, the "sweetness intensity X3", and the energy are defined as described in the above section for the coffee beverage, and the numerical values described in the above section for the coffee beverage are applicable as they are. In addition, examples of the "combination of glucose, sucrose, fructose, maltose, oligosaccharide, high-fructose corn syrup, or lactose" and the "combination of high-intensity sweetener" are the same as those described in the above section for the coffee beverage.

In a certain embodiment, the coffee beverage produced by the method of the present invention is a coffee beverage comprising:
(a) natural sugar in an amount corresponding to a sweetness intensity X1 of 0.1 to 5;
(b) high-intensity sweetener in an amount corresponding to a sweetness intensity X2 of 0.1 to 5;
(c) 5 mg/100 ml to 90 mg/100 ml of sodium; and
(d) 15 mg/100 ml to 100 mg/100 ml of potassium and/or 0.5 to 50 mg/100 ml of calcium,
   wherein sweetness of a sweetness intensity X3 of 5.5 to 12.5 is exhibited by the components (a) to (d), and 0.1 < (X1 + X2) ≤ 12.5 is satisfied.

In another embodiment, the coffee beverage produced by the method of the present invention is a coffee beverage comprising:
(a) natural sugar in an amount corresponding to a sweetness intensity X1 of 3 to 5;
(b) high-intensity sweetener in an amount corresponding to a sweetness intensity X2 of 1 to 5;
(c) 25 to 40 mg/100 ml of sodium; and
(d) 25 mg/100 ml to 70 mg/100 ml of potassium and/or 2 mg/100 ml to 25 mg/100 ml of calcium,
   wherein sweetness of a sweetness intensity of 5.5 to 12.5 is exhibited by the components (a) to (d), and 0.1 < (X1 + X2) ≤ 12.5 is satisfied. Furthermore, in the coffee beverage of the present invention, it is preferable that the energy is 50 Kcal/100 ml or less and (X1 + X2) is 6 or more.

In further another embodiment, the coffee beverage produced by the method of the present invention is a coffee beverage comprising:
(a) natural sugar in an amount corresponding to a sweetness intensity X1 of 0.1 to 5;
(b) high-intensity sweetener in an amount corresponding to a sweetness intensity X2 of 0.1 to 3;
(c) 5 mg/100 ml to 90 mg/100 ml of sodium; and
(d) 15 mg/100 ml to 100 mg/100 ml of potassium and/or 0.5 mg/100 ml to 50 mg/100 ml of calcium,
   wherein (1) sweetness of a sweetness intensity of 2.0 to 12.0 is exhibited by the components (a) to (d), and 0.1 < (X1 + X2) ≤ 12.5 is satisfied.

In another embodiment, the coffee beverage produced by the method of the present invention is a coffee beverage comprising:
(a) natural sugar in an amount corresponding to a sweetness intensity X1 of 3 to 5;
(b) high-intensity sweetener in an amount corresponding to a sweetness intensity X2 of 1 to 3;
(c) 5 mg/100 ml to 90 mg/100 ml of sodium; and
(d) 15 mg/100 ml to 100 mg/100 ml of potassium and/or 0.5 mg/100 ml to 50 mg/100 ml of calcium,
   wherein sweetness of a sweetness intensity of 2.0 to 12.0 is exhibited by the components (a) to (d), and 0.1 < (X1 + X2) ≤ 12.5 is satisfied.

In a specific aspect, the present invention provides the following method (hereinafter, referred to as "the method A of the present invention").

A method for producing a coffee beverage, comprising to a raw material:
(i) adding (a) natural sugar in an amount of a sweetness intensity X1 and (b) high-intensity sweetener selected from the group consisting of rebaudioside M, rebaudioside D, and combinations thereof in an amount of a sweetness intensity X2;
(ii) adding (c) sodium such that a sodium content in the beverage is 5 to 90 mg/100 ml, and
(iii) adding (d) potassium such that a potassium content in the beverage is 15 mg/100 ml to 100 mg/100 ml and/or calcium such that a calcium content in the beverage is 0.5 mg/100 ml to 50 mg/100 ml,
   wherein sweetness of a sweetness intensity X3 is exhibited by the components (a) to (d), and 0.1 < (X1 + X2) ≤ 20 is satisfied.

In the method A of the present invention, the "coffee beverage", the "natural sugar" (including examples of the combination of glucose, sucrose, fructose, maltose, oligosaccharide, high-fructose corn syrup, or lactose), the "sweetness intensity X1", the "high-intensity sweetener", the "sweetness intensity X2", the sodium content, the content of potassium and/or calcium, the form of sodium, potassium, and/or calcium in the coffee beverage, the "sweetness intensity X3", and the energy are defined as described in the above section for the coffee beverage A, and the numerical values described in the above section for the coffee beverage A are applicable as they are. In addition, the coffee beverage in the method A of the present invention corresponds to the coffee beverage A of the present invention, and the above items for the coffee beverage A of the present invention are applicable as they are. Furthermore, the "raw material", the "addition", the order of steps (i), (ii), and (iii), and the addition mode of each component in the method A of the present invention are defined as described for the method of the present invention.

In another specific aspect, the present invention provides the following method (hereinafter, referred to as "the method B of the present invention").

A method for producing a coffee beverage, comprising to a raw material:
(i) adding (a) natural sugar in an amount of a sweetness intensity X1 and (b) Luo han guo extract in an amount of a sweetness intensity X2;
(ii) adding (c) sodium such that a sodium content in the beverage is 5 to 90 mg/100 ml; and
(iii) adding (d) potassium such that a potassium content in the beverage is 15 mg/100 ml to 100 mg/100 ml and/or calcium such that a calcium content in the beverage is 0.5 mg/100 ml to 50 mg/100 ml,
   wherein sweetness of a sweetness intensity X3 is exhibited by the components (a) to (d), and 0.1 < (X1 + X2) ≤ 20 is satisfied.

In the method B of the present invention, the "coffee beverage", the "natural sugar" (including examples of the combination of glucose, sucrose, fructose, maltose, oligosaccharide, high-fructose corn syrup, or lactose), the "sweetness intensity X1", the "Luo han guo extract", the "sweetness intensity X2", the sodium content, the content of potassium and/or calcium, the form of sodium, potassium, and/or calcium in the coffee beverage, the "sweetness intensity X3", and the energy are defined as described in the above section for the coffee beverage B, and the numerical values described in the above section for the coffee beverage B are applicable as they are. In addition, the coffee beverage in the method B of the present invention corresponds to the coffee beverage B of the present invention, and the above items for the coffee beverage B of the present invention are applicable as they are. Furthermore, the "raw material", the "addition", the order of steps (i), (ii), and (iii), and the addition mode of each component in the method B of the present invention are defined as described for the method of the present invention.

In another specific aspect, the present invention provides the following method (hereinafter, referred to as "the method C of the present invention").

A method for producing a coffee beverage, comprising to a raw material:
(i) adding (a) natural sugar in an amount of a sweetness intensity X1 and (b) mogroside V in an amount of a sweetness intensity X2;
(ii) adding (c) sodium such that a sodium content in the beverage is 5 to 90 mg/100 ml; and
(iii) adding (d) potassium such that a potassium content in the beverage is 15 mg/100 ml to 80 mg/100 ml and/or calcium such that a calcium content in the beverage is 0.5 mg/100 ml to 50 mg/100 ml,
   wherein sweetness of a sweetness intensity X3 is exhibited by the components (a) to (d), and 0.1 < (X1 + X2) ≤ 20 is satisfied.

In the method C of the present invention, the "coffee beverage", the "natural sugar" (including examples of the combination of glucose, sucrose, fructose, maltose, oligosaccharide, high-fructose corn syrup, or lactose), the "sweetness intensity X1", the "mogroside V", the "sweetness intensity X2", the sodium content, the content of potassium and/or calcium, the form of sodium, potassium, and/or calcium in the coffee beverage, the "sweetness intensity X3", and the energy are defined as described in the above section for the coffee beverage C, and the numerical values described in the above section for the coffee beverage C are applicable as they are. In addition, the coffee beverage in the method C of the present invention corresponds to the coffee beverage C of the present invention, and the above items for the coffee beverage C of the present invention are applicable as they are. Furthermore, the "raw material", the "addition", the order of steps (i), (ii), and (iii), and the addition mode of each component in the method C of the present invention are defined as described for the method of the present invention.

In the coffee beverage produced by a method of the present invention,
the sweetness intensity X1 of the natural sugar, the sweetness intensity X2 of the high-intensity sweetener, the sodium content, the content of potassium and/or calcium, and the sweetness intensity X3 exhibited by the coffee beverage may be any values as long as 0.1 < (X1 + X2) ≤ 20 is satisfied. For example, it is also possible to combine any of the numerical values of the sweetness intensity X1, sweetness intensity X2, the sodium content, the content of potassium and/or calcium, sweetness intensity X3, and energy shown in the section for the coffee beverage of the present invention.

The present invention provides, as another aspect of the method of the present invention, the following method (hereinafter, referred to as "the method of another aspect of the present invention").

A method for producing a coffee beverage, comprising to a raw material:
(i) adding (a) natural sugar in an amount corresponding to a sweetness intensity X1 and (b) high-intensity sweetener in an amount corresponding to a sweetness intensity X2;
(ii) adding (c) sodium such that a sodium concentration in the beverage is 5 mg/100 ml to 90 mg/100 ml; and
(iii) adding (d) potassium such that a potassium content in the beverage is 15 mg/100 ml to 150 mg/100 ml and/or calcium such that a calcium content in the beverage is 0.5 mg/100 ml to 50 mg/100 ml,
   wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
   the coffee beverage has a sweetness of a sweetness intensity X3 exhibited by the components (a) to (d), and 0.1 < (X1 + X2) ≤ 20 is satisfied.

The coffee beverage produced by the method of the present invention is the coffee beverage of the second aspect of the present invention described in the above section "1. Coffee beverage having improved taste quality exhibited by natural sugar and high-intensity sweetener". In addition, the "raw material" in the method of the present invention may be each material or a mixture thereof necessary for production of a coffee beverage and may further include an additional component such as a preservative, a flavoring agent, a carrier, or a milk component. In addition, the "raw material" may be composed of a plurality of materials. However, regardless of the type of the raw material, the finally produced coffee beverage of the present invention does not include a substance that exhibits sweetness as a sweetener other than the components (a) and (b).

The method of another aspect of the present invention is the same as the method of the present invention, excluding the content of potassium. In addition, the content of potassium in the method of another aspect of the present invention is defined as described for the coffee beverage of the second aspect of the invention.

### 3. Concentrate for providing a coffee beverage

The present invention provides, as another embodiment, a concentrate for providing a coffee beverage of the above present invention (hereinafter, referred to as "the concentrate of the present invention"). According to an aspect of the present invention, the concentrate of the present invention comprises:
(a) natural sugar in an amount corresponding to a sweetness intensity X4;
(b) high-intensity sweetener in an amount corresponding to a sweetness intensity X5;
(c) 50 mg/100 ml to less than 900 mg/100 ml of sodium; and
(d) 150 mg/100 ml to 1000 mg/100 ml of potassium and/or 5 mg/100 ml to 500 mg/100 ml of calcium,
   wherein (X4 + X5) ≤ 200, preferably 1 < (X4 + X5) ≤ 200, and more preferably 50 < (X4 + X5) ≤ 200 are satisfied.

The concentrate of the present invention is used for providing a coffee beverage by diluting in an arbitrary ratio. The "coffee beverage" is the same as that described in "1. Coffee beverage having improved taste quality exhibited by natural sugar and high-intensity sweetener". For example, the concentrate of the present invention can be used in a beverage as a syrup or an undiluted solution. In this instance, the concentrate can be diluted 2-fold, 3-fold, 4-fold, 5-fold, 6-fold, 7-fold, 8-fold, 9-fold, or 10-fold and used. In addition, the concentrate of the present invention is concentrated and is therefore preferable in the aspects of preservability and transportability. The concentrate of the present invention may be solid or liquid.

The concentrate of the present invention is a 2- to 10-fold concentrate, preferably 3- to 9-fold concentrate, more preferably 4- to 8-fold concentrate, and further preferably 5- to 7-fold concentrate of the coffee beverage of the present invention.

The concentrate in an aspect of the present invention is a 6-fold concentrate of the coffee beverage of the present invention and comprises:
(a) natural sugar in an amount corresponding to a sweetness intensity X6;
(b) high-intensity sweetener in an amount corresponding to a sweetness intensity X7;
(c) 30 mg/100 ml to less than 540 mg/100 ml of sodium; and
(d) 90 mg/100 ml to 600 mg/100 ml of potassium and/or 3 mg/100 ml to 300 mg/100 ml of calcium,
   wherein (X6 + X7) ≤ 120, preferably 0.6 < (X6 + X7) ≤ 120, and more preferably 30 < (X6 + X7) ≤ 120 are satisfied.

The concentrate in another aspect of the present invention is an 8-fold concentrate of the coffee beverage of the present invention and comprises:
(a) natural sugar in an amount corresponding to a sweetness intensity X8;
(b) high-intensity sweetener in an amount corresponding to a sweetness intensity X9;
(c) 40 mg/100 ml to less than 720 mg/100 ml of sodium; and
(d) 120 mg/100 ml to 800 mg/100 ml of potassium and/or 4 mg/100 ml to 400 mg/100 ml of calcium,
   wherein (X8 + X9) ≤ 160, preferably 0.8 < (X8 + X9) ≤ 160, and more preferably 40 < (X8 + X9) ≤ 160 are satisfied.

As a concentrate of another aspect of the present invention, the following concentrate is provided. The concentrate comprises:
(a) natural sugar in an amount corresponding to a sweetness intensity X4;
(b) high-intensity sweetener in an amount corresponding to a sweetness intensity X5;
(c) 50 mg/100 ml to less than 900 mg/100 ml of sodium; and
(d) 150 mg/100 ml to 1500 mg/100 ml of potassium and/or 5 mg/100 ml to 500 mg/100 ml of calcium,
   wherein (X4 + X5) ≤ 200, preferably 1 < (X4 + X5) ≤ 200, and more preferably 50 < (X4 + X5) ≤ 200 are satisfied.

### 4. Method for enhancing sweetness of coffee beverage

The present invention provides, as another embodiment, a method for enhancing the sweetness of a coffee beverage (hereinafter, referred to as "the sweetness enhancing method of the present invention"). In an aspect of the present invention, the sweetness enhancing method of the present invention is characterized by containing,
(a) natural sugar in an amount corresponding to a sweetness intensity X1,
(b) high-intensity sweetener in an amount corresponding to a sweetness intensity X2,
(c) 5 mg/100 ml to 90 mg/100 ml of sodium, and
(d) 15 mg/100 ml to 100 mg/100 ml of potassium and/or 0.5 mg/100 ml to 50 mg/100 ml of calcium in a coffee beverage.

According to the sweetness enhancing method of the present invention, the sweetness of a coffee beverage is enhanced, and it is possible to provide a coffee beverage having a sweetness higher than the mere sum of the sweetness intensity when the component (a) is added to a coffee beverage and the sweetness intensity when the component (b) is added to a coffee beverage. In the sweetness enhancing method of the present invention, the "coffee beverage", the "natural sugar", the "sweetness intensity X1", the "high-intensity sweetener", the "sweetness intensity X2", the sodium content, the content of potassium and/or calcium, the form of sodium, potassium, and/or calcium in the coffee beverage, the "sweetness intensity X3", and the energy are defined as described in the above section for the coffee beverage, and the numerical values described in the above section for the coffee beverage are applicable as they are. In addition, examples of the "combination of glucose, sucrose, fructose, maltose, oligosaccharide, high-fructose corn syrup, or lactose" and the "combination of high-intensity sweetener" are the same as those described in the above section for the coffee beverage.

As a sweetness enhancing method of another aspect of the present invention, the following method is provided. The method is characterized by adding, to a coffee beverage,
(a) natural sugar in an amount corresponding to a sweetness intensity X1,
(b) high-intensity sweetener in an amount corresponding to a sweetness intensity X2,
(c) 5 mg/100 ml to 90 mg/100 ml of sodium, and
(d) 15 mg/100 ml to 150 mg/100 ml of potassium and/or 0.5 mg/100 ml to 50 mg/100 ml of calcium.

In the present specification, the term "at least" means that the number of a specific item may be greater than or equal to the mentioned number. In the present application, the term "about" means that a subject matter is in a range of ±25%, ±10%, ±5%, ±3%, ±2%, or ±1% of the numerical value following the "about". For example, "about 10" means a range of 7.5 to 12.5.

### EXAMPLES

Hereinafter, the present invention will now be specifically described with reference to examples but is not limited to the following examples.

Incidentally, in examples shown below, the contents of sodium and potassium contained in a beverage as a base before the addition of various additives were measured by atomic absorption spectrometry using SpectrAA240FS (manufactured by Agilent Technologies, Inc.), and the content of calcium was measured by ICP emission spectrometry using 5100VDV (manufactured by Agilent Technologies, Inc.) and ICPE-9000 (manufactured by Shimadzu Corporation). The contents of sodium, potassium, and calcium in a beverage sample after the addition of various additives are those obtained by adding the sodium, potassium, and calcium contents contained in the various additives calculated from the amounts of the additives to the sodium, potassium, and calcium contents, respectively, in the beverage as the base measured by the above methods.

### Example 1 Evaluation of taste quality improvement effect by sodium, potassium, and calcium

### Experiment method

Natural sugars {sucrose (manufactured by Pacific Sugar Mfg. Co., Ltd.) and glucose (manufactured by Showa Sangyo Co., Ltd.)}, rebaudioside D (RebD) (purity: 95% or more), sodium gluconate, potassium chloride, and calcium chloride were dissolved in a coffee extract liquid (a mixture of a coffee extract and a pH adjuster, caffeine content: 40 mg/100 ml, sodium content: 19 mg/100 ml, potassium content: 60 mg/100 ml, calcium content: 1.4 mg/100 ml) in the ratios shown in Table 2 below to prepare beverage samples. In addition, the solution not containing any of sodium gluconate, potassium chloride, and calcium chloride was used as sample 1.

Incidentally, the Brix in Table 2 was calculated from the concentrations of the natural sugars, the sodium content was calculated from the addition amount of sodium gluconate and the sodium content derived from the coffee extract liquid, the potassium content was calculated from the addition amount of potassium chloride and the potassium content derived from the coffee extract liquid, the calcium content was calculated from the addition amount of calcium chloride and the calcium content derived from the coffee extract liquid, and the energy (kcal/100 ml) was calculated by taking those derived from RebD, sodium, potassium, and calcium as 0 (kcal/100 ml). As shown in Table 2, the addition amount of Na in sample 1-1 was 20 mg/100 ml, the total addition amount of Na and K in sample 1-2 was 20 mg/100 ml, and the total addition amount of Na and Ca in sample 1-3 was 20 mg/100 ml.

**Table 2**

| Content | Sample 1 | 1-1 | 1-2 | 1-3 |
|---|---|---|---|---|
| Sucrose (w/v%) | 1.0 | 1.0 | 1.0 | 1.0 |
| Glucose (w/v%) | 3.5 | 3.5 | 3.5 | 3.5 |
| Brix (derived from sucrose + glucose) | 4.5 | 4.5 | 4.5 | 4.5 |
| RebD (ppm) | 208 | 208 | 208 | 208 |
| Sodium gluconate (g/L) | 0 | 1.90 | 0.95 | 0.95 |
| Sodium content in beverage sample (mg/100ml) | 19 | 39 | 29 | 29 |
| Potassium chloride (g/L) | 0 | 0 | 0.2 | 0 |
| Potassium content in beverage sample (mg/100ml) | 60 | 60 | 70 | 60 |
| Calcium chloride (g/L) | 0 | 0 | 0 | 0.28 |
| Calcium content in beverage sample (mg/100ml) | 1.4 | 1.4 | 1.4 | 11.4 |
| Energy (Kcal/100ml) | 18 | 18 | 18 | 18 |

The taste quality improvement effect by sodium, potassium and calcium was verified by sensory comparison of taste qualities of these beverage samples. The taste qualities as sensory evaluation items were "intensity of sweetness", "intensity of flavor (aroma)", "intensity of odd taste (such as bitter taste and astringent taste)", and "intensity of saltiness", and the verification was carried out by those (four persons) who received sensory training as panelists.

First, each panelist calculated the "sensory evaluation score" for each taste quality of each beverage sample based on the common taste quality evaluation criteria possessed by the panelists through daily training.

The "sensory evaluation score" a difference in the taste quality from sample 1 quantified in a range of -3.0 to +3.0 based on the degree of taste quality of sample 1 defined as "0" (reference). The criteria of the "sensory evaluation score" of each item are as follows.

### Sensory evaluation score

"+3.0": it is felt that the taste quality as an object is very strong compared with sample 1;
"+2.0": it is felt that the taste quality as an object is strong compared with sample 1;
"+1.0": it is felt that the taste quality as an object is slightly strong compared with sample 1;
"0": it is felt that the taste quality as an object is equal to sample 1;
"-1.0": it is felt that the taste quality as an object is slightly weak compared with sample 1;
"-2.0": it is felt that the taste quality as an object is weak compared with sample 1; and
"-3.0": it is felt that the taste quality as an object is very weak compared with sample 1.

Incidentally, in the light of the above criteria, for example, when it was judged that the taste quality was between "+1.0" and "+2.0", it was scored as "+1.5" in 0.5 increments.

The "sensory evaluation score" calculated by each panelist was converted to a "converted score" based on the following criteria, and the total value of the converted scores of four panelists was calculated for each taste quality.

### Converted score

Converted score "3": a sensory evaluation score of +1.5 or more;
Converted score "2": a sensory evaluation score of +1.0 or more and less than +1.5;
Converted score "1": a sensory evaluation score of +0.5 or more and less than +1.0;
Converted score "0": a sensory evaluation score of higher than -0.5 and less than +0.5;
Converted score "-1": a sensory evaluation score of higher than -1.0 and -0.5 or less;
Converted score "-2": a sensory evaluation score of higher than -1.5 and -1.0 or less; and
Converted score "-3": a sensory evaluation score of -1.5 or less.

Incidentally, regarding the "intensity of sweetness" and the "intensity of flavor", a larger total value of converted scores is preferable, and regarding the "intensity of odd taste" and the "intensity of saltiness", a smaller total value of converted scores is preferable.

### Results

The results of the calculated total value of converted scores of each taste quality are shown in Table 3.

**Table 3**

| Taste quality | Sample 1 | 1-1 | 1-2 | 1-3 |
|---|---|---|---|---|
| Intensity of sweetness | 0 | 5 | 7 | 6 |
| Intensity of flavor | 0 | 2 | 7 | 8 |
| Intensity of odd taste | 0 | -3 | -5 | -6 |
| Intensity of saltiness | 0 | 0 | 0 | 0 |

### Example 2 Evaluation of taste quality improvement effect by difference in concentration of potassium and/or calcium

### Experiment method

As in Example 1, natural sugars {sucrose (manufactured by Pacific Sugar Mfg. Co., Ltd.) and glucose (manufactured by Showa Sangyo Co., Ltd.)}, rebaudioside D (RebD) (purity: 95% or more), sodium gluconate, potassium chloride, and calcium chloride were dissolved in a coffee extract liquid (a mixture of a coffee extract and a pH adjuster, caffeine content: 40 mg/100 ml, sodium content: 19 mg/100 ml, potassium content: 60 mg/100 ml, calcium content: 1.4 mg/100 ml) in the ratios shown in Table 4 below to prepare beverage samples. In addition, the solution not containing any of sodium gluconate, potassium chloride, and calcium chloride was used as sample 2. Incidentally, the Brix in Table 4 was calculated from the concentrations of the natural sugars, the sodium content was calculated from the addition amount of sodium gluconate and the sodium content derived from the coffee extract liquid, the potassium content was calculated from the addition amount of potassium chloride and the potassium content derived from the coffee extract liquid, the calcium content was calculated from the addition amount of calcium chloride and the calcium content derived from the coffee extract liquid, and the energy (kcal/100 ml) was calculated by taking those derived from RebD, sodium, potassium, and calcium as 0 (kcal/100 ml).

**Table 4**

| Content | Sample 2 | 2-1 | 2-2 | 2-3 | 2-4 | 2-5 | 2-6 | 2-7 | 2-8 |
|---|---|---|---|---|---|---|---|---|---|
| Sucrose (w/v%) | 1.0 | 1.0 | 1.0 | 1.0 | 1.0 | 1.0 | 1.0 | 1.0 | 1.0 |
| Glucose (w/v%) | 3.5 | 3.5 | 3.5 | 3.5 | 3.5 | 3.5 | 3.5 | 3.5 | 3.5 |
| Brix (derived from sucrose + glucose) | 4.5 | 4.5 | 4.5 | 4.5 | 4.5 | 4.5 | 4.5 | 4.5 | 4.5 |
| RebD (ppm) | 208 | 208 | 208 | 208 | 208 | 208 | 208 | 208 | 208 |
| Sodium gluconate (g/L) | 0 | 0.95 | 0.95 | 0.95 | 0.95 | 0.95 | 0.95 | 0.95 | 0.95 |
| Sodium content in beverage sample (mg/100ml) | 19 | 29 | 29 | 29 | 29 | 29 | 29 | 29 | 29 |
| Potassium chloride (g/L) | 0 | 0.2 | 0.4 | 0.6 | 0.8 | 0 | 0 | 0 | 0 |
| Potassium content in beverage sample (mg/100ml) | 60 | 70 | 80 | 90 | 100 | 60 | 60 | 60 | 60 |
| Calcium chloride (g/L) | 0 | 0 | 0 | 0 | 0 | 0.28 | 0.56 | 0.84 | 1.12 |
| Calcium content in beverage sample (mg/100ml) | 1.4 | 1.4 | 1.4 | 1.4 | 1.4 | 11.4 | 21.4 | 31.4 | 41.4 |
| Energy (Kcal/100ml) | 18 | 18 | 18 | 18 | 18 | 18 | 18 | 18 | 18 |

The taste quality improvement effect by differences in concentration of potassium and/or calcium was verified by sensory comparison of taste qualities of these beverage samples. The taste qualities as sensory evaluation items were "intensity of sweetness", "intensity of flavor (aroma)", "intensity of odd taste (such as bitter taste and astringent taste)", and "intensity of saltiness", and the verification was carried out by panelists (four persons) who had received sensory training. Specifically, evaluation was performed as in Example 1, the "sensory evaluation score" calculated by each panelist was converted to a "converted score", and the total value of the converted scores of four panelists was calculated for each taste quality.

### Results

The results of the calculated total value of converted scores of each taste quality are shown in Table 5.

**Table 5**

| Taste quality | Sample 2 | 2-1 | 2-2 | 2-3 | 2-4 | 2-5 | 2-6 | 2-7 | 2-8 |
|---|---|---|---|---|---|---|---|---|---|
| Intensity of sweetness | 0 | 4 | 7 | 7 | 6 | 4 | 6 | 6 | 7 |
| Intensity of flavor | 0 | 5 | 6 | 7 | 6 | 5 | 4 | 4 | 5 |
| Intensity of odd taste | 0 | 0 | -2 | 1 | 3 | -4 | -4 | -2 | -2 |
| Intensity of saltiness | 0 | 0 | 0 | 0 | 0 | 0 | 0 | 0 | 0 |

### Example 3 Evaluation of taste quality improvement effect by various high-intensity sweeteners and sodium, potassium, and/or calcium

### Experiment method

As in Example 1, natural sugars {sucrose (manufactured by Pacific Sugar Mfg. Co., Ltd.) and glucose (manufactured by Showa Sangyo Co., Ltd.)}, mogroside V (MogV) (purity: 95% or more), sodium gluconate, potassium chloride, and calcium chloride were dissolved in a coffee extract liquid (a mixture of a coffee extract and a pH adjuster, caffeine content: 40 mg/100 ml, sodium content: 19 mg/100 ml, potassium content: 60 mg/100 ml, calcium content: 1.4 mg/100 ml) in the ratios shown in Table 6 below to prepare beverage samples. In addition, the solutions not containing any of sodium gluconate, potassium chloride, and calcium chloride were used as sample 3 (containing MogV) and sample 3A (containing RebM), respectively. Incidentally, the Brix in Table 6 was calculated from the concentrations of the natural sugars, the sodium content was calculated from the addition amount of sodium gluconate and the sodium content derived from the coffee extract liquid, the potassium content was calculated from the addition amount of potassium chloride and the potassium content derived from the coffee extract liquid, the calcium content was calculated from the addition amount of calcium chloride and the calcium content derived from the coffee extract liquid, and the energy (kcal/100 ml) was calculated by taking those derived from MogV, RebM, sodium, potassium, and calcium as 0 (kcal/100 ml).

**Table 6**

| Content | Sample 3 | 3-1 | 3-2 | Sample 3A | 3-3 | 3-4 | 3-5 |
|---|---|---|---|---|---|---|---|
| Sucrose (w/v%) | 1.0 | 1.0 | 1.0 | 1.0 | 1.0 | 1.0 | 1.0 |
| Glucose (w/v%) | 3.5 | 3.5 | 3.5 | 3.5 | 3.5 | 3.5 | 3.5 |
| Brix (derived from sucrose + glucose) | 4.5 | 4.5 | 4.5 | 4.5 | 4.5 | 4.5 | 4.5 |
| MogV (ppm) | 208 | 208 | 208 | 0 | 0 | 0 | 0 |
| RebM (ppm) | 0 | 0 | 0 | 208 | 208 | 208 | 208 |
| Sodium gluconate (g/L) | 0 | 0.95 | 0.95 | 0 | 1.90 | 0.95 | 0.95 |
| Sodium content in beverage sample (mg/100ml) | 19 | 29 | 29 | 19 | 39 | 29 | 29 |
| Potassium chloride(g/L) | 0 | 0.2 | 0 | 0 | 0 | 0.2 | 0 |
| Potassium content in beverage sample (mg/100ml) | 60 | 70 | 60 | 60 | 60 | 70 | 60 |
| Calcium chloride (mM) | 0 | 0 | 0.28 | 0 | 0 | 0 | 0.28 |
| Calcium content in beverage sample (mg/100ml) | 1.4 | 1.4 | 11.4 | 1.4 | 1.4 | 1.4 | 11.4 |
| Energy (Kcal/100ml) | 18 | 18 | 18 | 18 | 18 | 18 | 18 |

The taste quality improvement effect by sodium, potassium, and calcium was verified by sensory comparison of taste qualities of these beverage samples. The taste qualities as sensory evaluation items were "intensity of sweetness", "intensity of flavor (aroma)", "intensity of odd taste (such as bitter taste and astringent taste)", "intensity of saltiness", and "carbonation feeling", and the verification was carried out by panelists (four persons) who had received sensory training. Specifically, evaluation was performed as in Example 1, the "sensory evaluation score" calculated by each panelist was converted to a "converted score", and the total value of the converted scores of four panelists was calculated for each taste quality. In samples 3 to 3-2, the score of sample 3 was used as reference (0 point), and in samples 3A to 3-5, the score of sample 3A was used as reference (0 point).

### Results

The results of the calculated total value of converted scores of each taste quality are shown in Table 7.

**Table 7**

| Taste quality | Sample3 | 3-1 | 3-2 | Sample3A | 3-3 | 3-4 | 3-5 |
|---|---|---|---|---|---|---|---|
| Intensity of sweetness | 0 | 5 | 3 | 0 | 6 | 5 | 4 |
| Intensity of flavor | 0 | 1 | 5 | 0 | 4 | 4 | 4 |
| Intensity of odd taste | 0 | -1 | 0 | 0 | 0 | -1 | 0 |
| Intensity of saltiness | 0 | 0 | 0 | 0 | 0 | 0 | 0 |

### INDUSTRIAL APPLICABILITY

The method of the present invention provides a method for increasing the sweetness of a coffee beverage or sweet composition, which is not a simple sweetness that is obtained by increasing the amounts of a natural sugar and high-intensity sweetener used, and providing good taste.

## Claims

1. A coffee beverage comprising:
(a) natural sugar in an amount corresponding to a sweetness intensity X1;
(b) high-intensity sweetener in an amount corresponding to a sweetness intensity X2;
(c) 5 mg/100 ml to 90 mg/100 ml of sodium; and
(d) 15 mg/100 ml to 100 mg/100 ml of potassium and/or 0.5 mg/100 ml to 50 mg/100 ml of calcium,
wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
0.1 < (X1 + X2) ≤ 20 is satisfied.

2. Coffee beverage according to Claim 1, wherein a sodium content is 25 to 60 mg/100 ml.

3. Coffee beverage according to Claim 1 or 2, comprising 25 to 70 mg/100 ml of potassium and/or 2 mg/100 ml to 25 mg/100 ml of calcium.

4. Coffee beverage according to any one of Claims 1 to 3, wherein energy is 50 Kcal/100 ml or less.

5. Coffee beverage according to any one of Claims 1 to 4, wherein X1 is 0.1 to 5.9.

6. Coffee beverage according to any one of Claims 1 to 5, which comprises 40 mg/100 ml to 100 mg/100 ml of caffeine.

7. Coffee beverage according to any one of Claims 1 to 6, wherein the natural sugar is at least one selected from the group consisting of glucose, sucrose, fructose, maltose, oligosaccharide, high-fructose corn syrup, lactose, psicose, allose, tagatose, and combinations thereof.

8. Coffee beverage according to any one of Claims 1 to 7, wherein the high-intensity sweetener b1 is at least one selected from the group consisting of rebaudioside M, rebaudioside D, Luo han guo extract, mogroside V, and combinations thereof.

9. Coffee beverage according to any one of Claims 1 to 8, wherein the sodium is at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptanoate, sodium gluconate, sodium glutamate, sodium tartrate, sodium aspartate, sodium lactate, sodium caseinate, sodium ascorbate, and mixtures thereof.

10. Coffee beverage according to any one of Claims 1 to 9, wherein the potassium is at least one selected from the group consisting of potassium alginate, potassium chloride, potassium citrate, potassium gluconate, L-potassium glutamate, potassium bromate, DL-potassium hydrogen tartrate, L-potassium hydrogen tartrate, potassium nitrate, potassium hydroxide, potassium sorbate, potassium carbonate, potassium lactate, potassium norbixin, potassium pyrosulfate, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.

11. Coffee beverage according to any one of Claims 1 to 10, wherein the calcium is at least one selected from the group consisting of L-calcium ascorbate, calcium alginate, calcium disodium ethylenediaminetetraacetate, calcium chloride, calcium carboxymethyl cellulose, calcium citrate, calcium glycerophosphate, calcium gluconate, L-calcium glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.

12. Coffee beverage according to any one of Claims 1 to 11, wherein the coffee beverage comprises 25 to 40 mg/100 ml of sodium, comprises 25 to 70 mg/100 ml of potassium and/or 2 mg/100 ml to 25 mg/100 ml of calcium, and energy is 50 Kcal/100 ml or less, and X1 + X2 is 6 or more.

13. Coffee beverage according to any one of Claims 1 to 12, which is packed in a container.

14. A method for producing a coffee beverage, comprising to a raw material:
(i) adding (a) natural sugar in an amount of a sweetness intensity X1 and (b) high-intensity sweetener in an amount of a sweetness intensity X2;
(ii) adding (c) sodium such that a sodium content in the beverage is 5 mg/100 ml to 90 mg/100 ml; and
(iii) adding (d) potassium such that a potassium content in the beverage is 15 mg/100 ml to 100 mg/100 ml and/or calcium such that a calcium content in the beverage is 0.5 mg/100 ml to 50 mg/100 ml,
wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
0.1 < (X1 + X2) ≤ 20 is satisfied.

15. Method according to Claim 14, wherein in the coffee beverage, the sodium content is 25 to 60 mg/100 ml.

16. Method according to Claim 14 or 15, wherein the coffee beverage comprises 25 to 70 mg/100 ml of potassium and/or 2 to 25 mg/100 ml of calcium.

17. Method according to any one of Claims 14 to 16, wherein energy of the coffee beverage is 50 Kcal/100 ml or less.

18. Method according to any one of Claims 14 to 17, wherein X1 is 0.1 to 5.9.

19. Method according to any one of Claims 14 to 18, wherein the coffee beverage comprises 40 mg/100 ml to 100 mg/100 ml of caffeine.

20. Method according to any one of Claims 14 to 19, wherein the natural sugar is at least one selected from the group consisting of glucose, sucrose, fructose, maltose, oligosaccharide, high-fructose corn syrup, lactose, psicose, allose, tagatose, and combinations thereof.

21. Method according to any one of Claims 14 to 20, wherein the high-intensity sweetener is at least one selected from the group consisting of rebaudioside M, rebaudioside D, Luo han guo extract, mogroside V, and combinations thereof.

22. Method according to any one of Claims 14 to 21, wherein the sodium is at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptanoate, sodium gluconate, sodium glutamate, sodium tartrate, sodium aspartate, sodium lactate, sodium caseinate, sodium ascorbate, and mixtures thereof.

23. Method according to any one of Claims 14 to 22, wherein the potassium is at least one selected from the group consisting of potassium alginate, potassium chloride, potassium citrate, potassium gluconate, L-potassium glutamate, potassium bromate, DL-potassium hydrogen tartrate, L-potassium hydrogen tartrate, potassium nitrate, potassium hydroxide, potassium sorbate, potassium carbonate, potassium lactate, potassium norbixin, potassium pyrosulfate, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.

24. Method according to any one of Claims 14 to 23, wherein the calcium is at least one selected from the group consisting of L-calcium ascorbate, calcium alginate, calcium disodium ethylenediaminetetraacetate, calcium chloride, calcium carboxymethyl cellulose, calcium citrate, calcium glycerophosphate, calcium gluconate, L-calcium glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.

25. Method according to any one of Claims 14 to 24, wherein the coffee beverage comprises 25 to 40 mg/100 ml of sodium, comprises 25 to 70 mg/100 ml of potassium and/or 2 mg/100 ml to 25 mg/100 ml of calcium, energy is 50 Kcal/100 ml or less, and X1 + X2 is 6 or more.

26. A concentrate for providing the coffee beverage according to Claim 1, comprising:
(a) natural sugar in an amount corresponding to a sweetness intensity X4;
(b) high-intensity sweetener in an amount corresponding to a sweetness intensity X5;
(c) 50 mg/100 ml to 900 mg/100 ml of sodium; and
(d) 150 mg/100 ml to 1000 mg/100 ml of potassium and/or 5 mg/100 ml to 500 mg/100 ml of calcium,
wherein (X4 + X5) ≤ 200 is satisfied.

27. A method for enhancing sweetness of a coffee beverage, comprising containing:
(a) natural sugar in an amount corresponding to a sweetness intensity X1,
(b) high-intensity sweetener in an amount corresponding to a sweetness intensity X2,
(c) 5 mg/100 ml to 90 mg/100 ml of sodium, and
(d) 15 mg/100 ml to 100 mg/100 ml of potassium and/or 0.5 mg/100 ml to 50 mg/100 ml of calcium in the coffee beverage.

28. A coffee beverage comprising:
(a) natural sugar in an amount corresponding to a sweetness intensity X1;
(b) high-intensity sweetener in an amount corresponding to a sweetness intensity X2;
(c) 5 mg/100 ml to 90 mg/100 ml of sodium; and
(d) 15 mg/100 ml to 150 mg/100 ml of potassium and/or 0.5 mg/100 ml to 50 mg/100 ml of calcium,
wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin; and
0.1 < (X1 + X2) ≤ 20 is satisfied.
